(19) Europäisches Patentamt / European Patent Office / Office européen des brevets

(11) **EP 2 062 377 B1**

(12) **FASCICULE DE BREVET EUROPEEN**

(45) Date de publication et mention
de la délivrance du brevet:
**09.04.2014 Bulletin 2014/15**

(21) Numéro de dépôt: **07848227.0**

(22) Date de dépôt: **13.09.2007**

(51) Int Cl.:
$H04B\ 7/04$ (2006.01)    $H04L\ 1/00$ (2006.01)
$H04L\ 1/06$ (2006.01)    $H04B\ 7/06$ (2006.01)

(86) Numéro de dépôt international:
**PCT/FR2007/001487**

(87) Numéro de publication internationale:
**WO 2008/031951 (20.03.2008 Gazette 2008/12)**

(54) **PROCÉDÉ ADAPTATIF D'ÉMISSION ET DE RÉCEPTION D'UN SIGNAL DANS UN SYSTÈME MULTI-ANTENNES, DISPOSITIFS D'ÉMISSION ET DE RÉCEPTION, PRODUITS PROGRAMME D'ORDINATEUR ET SIGNAL CORRESPONDANTS.**

ADAPTIVES VERFAHREN ZUM SENDEN UND EMPFANGEN EINES SIGNALS IN EINEM MEHRANTENNENSYSTEM, ENTSPRECHENDE SENDE- UND EMPFANGSGERÄTE, COMPUTERPROGRAMM UND SIGNAL

ADAPTIVE METHOD OF TRANSMITTING AND RECEIVING A SIGNAL IN A MULTI-ANTENNA SYSTEM, CORRESPONDING TRANSMISSION AND RECEPTION DEVICES, COMPUTER PROGRAM PRODUCTS AND SIGNAL

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **13.09.2006 FR 0608021**
**20.12.2006 FR 0611136**

(43) Date de publication de la demande:
**27.05.2009 Bulletin 2009/22**

(73) Titulaire: **Orange**
**75015 Paris (FR)**

(72) Inventeurs:
• **VISOZ, Raphaël**
**92130 Issy Moulineaux (FR)**
• **LAYEC, Patricia**
**92170 Vanves (FR)**
• **BERTHET, Antoine**
**92290 Chatenay Malabry (FR)**

(74) Mandataire: **Guy, Marion**
**Cabinet Vidon**
**Technopôle Atalante**
**16B rue de Jouanet**
**35703 Rennes Cedex 7 (FR)**

(56) Documents cités:
**WO-A-02/03568**

• **ERICSSON: "Selective Per Antenna Rate Control (S-PARC)" 3GPP TSG RAN WG1#36, 16 février 2004 (2004-02-16), - 20 février 2004 (2004-02-20) XP002429025**
• **SEONG TAEK CHUNG, ANGEL LOZANO, HOWARD C. HUANG, ARAK SUTIVONG, JOHN M. CIOFFI: "Approaching the MIMO Capacity with a Low-Rate Feedback Chanel in V-BLAST" EURASIP JOURNAL ON APPLIED SIGNAL PROCESSING, vol. 5, 2004, pages 762-771, XP002429026 cité dans la demande**

**Description**

**1. Domaine de l'invention**

Le domaine de l'invention est celui des communications numériques. Plus précisément, l'invention concerne l'émission et la réception de signaux dans le cadre de systèmes multi-antennes de type MIMO (de l'anglais « Multiple-Input Multiple-Output » pour « Entrées Multiples Sorties Multiples »).

L'invention trouve notamment des applications dans le domaine des radiocommunications, dans des systèmes présentait des canaux de transmission sélectifs en fréquence (systèmes de type monoporteuse) ou non sélectifs en fréquence (systèmes de type multiporteuses).

En particulier, l'invention se situe au niveau de la couche physique de réseaux d'accès mobiles multi-antennes, et peut s'appliquer aux communications sur voie montante (d'un terminal vers une station de base), ainsi qu'aux communications sur voie descendante (d'une station de base vers un terminal).

**2. Art intérieur**

Les techniques d'émission/réception de signaux numériques dans des systèmes comprenant de multiples antennes présentent de nombreux avantages, notamment pour les réseaux d'accès mobiles. En effet, de telles techniques permettent une augmentation d'un débit de transmission, d'une capacité, ou encore d'une robustesse de ces systèmes multi-antennes, sans pour autant nécessiter une augmentation des puissances d'émission ou des bandes de fréquence allouées.

On connaît ainsi, selon l'art antérieur, une technique permettant d'atteindre la capacité en boucle ouverte pour des canaux à évanouissements non sélectifs en fréquence, sous l'hypothèse d'entrées gaussiennes indépendantes. Cette technique repose sur la mise en oeuvre d'un récepteur de type MMSE (de l'anglais « Minimum Mean-Square Error ») combiné à une annulation d'interférence successive, et sur la mise en oeuvre d'un contrôle de rendements par antenne, noté PARC (de l'anglais « Per Antenna Rate Control »), permettant d'adapter régulièrement le rendement de chaque antenne d'émission à la capacité du canal de transmission équivalent correspondant, et ainsi d'éviter une propagation d'erreurs au niveau de l'annulation d'interférences.

On rappelle qu'on entend classiquement par « rendement » un choix de schéma de modulation et codage MCS (de l'anglais « Modulation and Coding Scheme »), c'est-à-dire qu'il comprend :

- le rendement du code de canal : par exemple 114, 113, 112, etc ;
- l'ordre de la modulation choisie : par exemple de type BPSK (en anglais « Binary Phase Shift Keying », en français « modulation de phase à 2 états »), QPSK (en anglais « Quadrature PSK », en français « modulation de phase en quadrature »), 16QAM (en anglais « 16-Quadrature Amplitude Modulations, en français « modulation d'amplitude en quadrature à 16 états »), etc.

En particulier, la technique notée SIC-PARC (pour «Successive Interference Cancellation - PARC ») permet de transmettre des flux de données indépendants, qui peuvent présenter des rendements différente, sur chacune des antennes d'émission d'un système multi-antennes. Selon cette technique, la puissance fournie à l'émission peut être uniformément distribuée entre toutes les antennes d'émission.

En réception le rapport signal à bruit-plus-interférences SINR (de l'anglais « Signal-to-Interference-plus-Noise Ratio ») associé à chacune des antennes d'émission est déterminé, à partir d'une estimation du canal de transmission.

Ainsi, un récepteur connaissant une famille de schémas de modulation et codage disponible en émission peut déterminer les techniques de modulation et codage à utiliser en émission pour minimiser l'écart avec les performances théoriques, et transmettre ces éléments à l'émetteur grâce à une information issue du récepteur, encore appelée « feedback partiel instantané », ponte par exemple par un message CQI (de l'anglais « Channel Quality Indicator » pour « indicateur de qualité du canal »).

Plus précisément, encore, la norme d'émission considérée permet de définir une famille de schémas de modulation et codage MCS, et donc de rendements discrets, permettant à un récepteur de déterminer les MCS, et donc les rendements discrets par antenne, à utiliser.

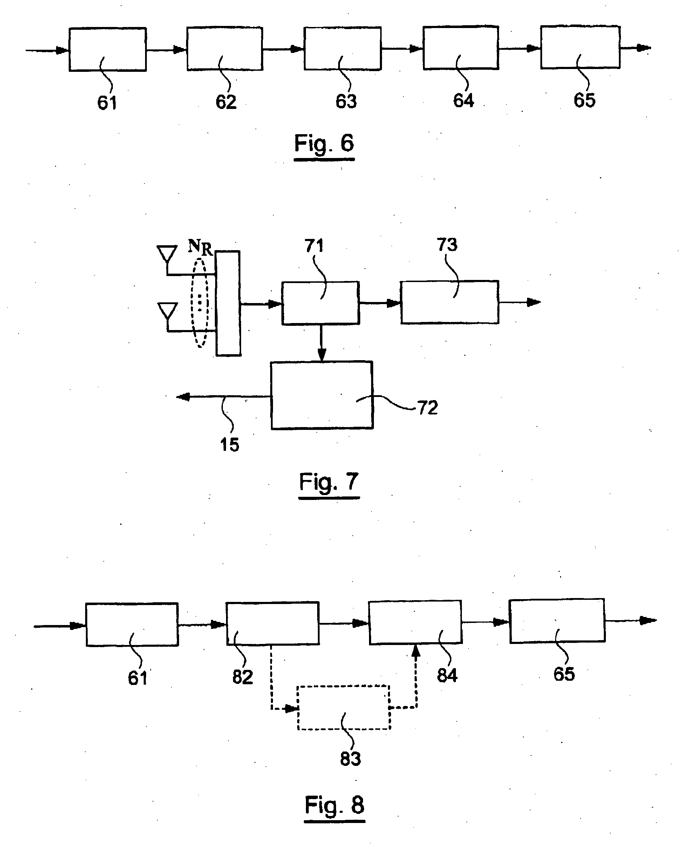

Une amélioration de cette technique de l'art antérieur, notée S-PARC, est notamment décrite dans le document ERICSSON « Selective Per Antenna Rate Control (S-PARC) », 3GPP TSG RAN WG1, de février 2004, et illustré en relation avec la figure 6. Cette technique présente l'avantage de permettre la sélection d'un ensemble d'antennes d'émission actives parmi les antennes d'émission disponibles. On distingue ainsi deux sous-ensembles d'antennes d'émission : les antennes actives et les antennes non actives.

De cette manière, plutôt que considérer tous les flux associés à chaque antenne d'émission de manière indépendante, on considère uniquement les flux associés aux antennes d'émission actives. Ainsi, le nombre de flux indépendant transmis, égal au nombre d'antennes actives, est inférieur ou égal au nombre total d'antennes d'émission

La sélection des antennes d'émission peut être effectuée en fonction de la qualité du canal de transmission et/ou de la corrélation des antennes d'émission, de façon à maximiser notamment la somme des rendements sur tous les flux, et donc la capacité globale du système.

Autrement dit, l'attribution des rendements discrets à chaque antenne d'émission est basée sur la réception d'un CQI par antenne, indiquant le rendement discret par antenne (MCS) à utiliser.

Ainsi, comme illustré en figure 6, un récepteur commence par estimer le canal de transmission au cours d'une première étape 61. Au cours d'une étape suivante 62, le récepteur détermine le rapport SINR associé à chacune des antennes d'émission, et remonte cette information à l'émetteur (« feedback »). L'émetteur associé peut alors sélectionner (63) les antennes d'émission actives, et en déduire le rendement théorique à utiliser par antenne et le schéma de modulation et codage MCS à utiliser (64) pour minimiser l'écart avec le rendement théorique. Finalement, l'émetteur transmet des paquets de données à partir des antennes d'émission actives, au cours d'une étape 65.

Cependant, un inconvénient de cette technique est qu'elle ne prend pas en compte le jeu de rendements discrets disponible à l'émission lors de la sélection des antennes actives. En pratique, cette technique souffre donc d'un bruit de quantification dû à la famille de rendements discrets disponibles. Par conséquent, la discrétisation des rendements théoriques appliquée par la suite (c'est-à-dire le choix du schéma de modulation et codage MCS à utiliser pour minimiser l'écart avec le rendement théorique, parmi les MCS disponibles) provoque une perte d'efficacité spectrale.

Selon une autre technique, on cherche à optimiser les puissances et les rendements alloués. Par exemple, S. T. Chung et al. proposent, dans le document « Approaching the MIMO Capacity with low-rate feed-back channel in V-BLAST » (Eurasip Journal on applied signal processing, pages 762-771. 2004). une technique permettant d'optimiser conjointement l'ordre de décodage et les puissances allouées à chacune, des antennes d'émission, de façon à respecter les contraintes d'émission, et notamment de rendements discrets (MCS). Cette technique est connue sous le nom de « SRPQ2: efficient decoding order » (en anglais « Successive rate and power quantization », en français « quantification successive de rendement et de puissances »).

Cette technique utilise également un codage de type scalaire, indépendant par antenne, choisi de façon à approcher une capacité maximale définie par la limite de Shannon, notamment en vue d'obtenir un taux d'erreur binaire faible et ainsi maximiser la capacité globale du système.

Cependant, un inconvénient de cette technique d'optitnisation conjointe des rendements et des puissances, associée à la recherche d'un ordre de décodage optimal pour s'adapter à la distribution discrète des rendements disponibles, est qu'elle ne fonctionne que dans le cadre d'un codage scalaire.

On constate en effet que les techniques de l'art antérieur traitent toujours chaque antenne d'émission séparément (codage scalaire), un exemple est le document WO 02/03568, ou bien toutes les antennes d'émission simultanément (codage multidimensionnel).

## 3. Exposé de l'invention

L'invention propose une solution nouvelle qui ne présente pas l'ensemble de ces inconvénients de l'art antérieur, sous la forme d'un procédé de réception d'un signal reçu, correspondant à un signal de données émis par un émetteur à destination d'un récepteur via un canal de transmission, ledit émetteur comprenant $N_T$ antennes d'émission et ledit récepteur comprenant $N_R$ antennes de réception, avec $N_T$ et $N_R$ supérieurs ou égaux à 2.

Selon l'invention, un tel procédé de réception comprend les étapes suivantes :

- analyse dudit signal reçu, délivrant une information représentative dudit canal de transmission;
- détermination périodique et/ou en fonction d'une variation dudit canal de transmission :

  ■ d'au moins une répartition desdites antennes d'émission en au moins un groupe d'au moins une antenne, en fonction de ladite information représentative du canal de transmission, au moins un groupe comprenant au moins deux antennes d'émission pour au moins une desdites déterminations ;
  ■ des rendements spécifiques affectés respectivement à chacun desdits groupes d'antennes, pour chaque répartition en fonction de ladite information représentative du canal de transmission ;

- transmission audit émetteur d'un signal de paramétrage définissant la ou lesdites répartitions et lesdits rendements spécifiques.

Ainsi, l'invention propose une technique permettant d'adapter une répartition par groupe des antennes d'émission, en fonction d'une information représentative du canal de transmission, de façon à optimiser les performances de transmission en fonction notamment des rendements de code disponibles en émission. On considère ainsi un partitionnement des antennes en émission, c'est-à-dire des groupes disjoints d'antennes d'émission, un groupe comprenant au moins une antenne d'émission.

Le procédé de réception selon l'invention permet donc de transmettre à l'émetteur un signal de paramétrage définissant des informations d'adaptation, comprenant au moins une répartition en groupes et les rendements alloués à chaque groupe selon les différentes répartitions, pour choisir les valeurs adéquates de ces paramètres de façon à optimiser le débit (la capacité), et/ou la robustesse, etc, du système multi-antennes. Ce signal de paramétrage est par exemple transmis du récepteur vers l'émetteur (« feedback » du récepteur) au moyen d'un message CQI.

Par exemple, si plusieurs répartitions envisageables sont définies dans le signal de paramétrage, c'est l'émetteur qui sélectionnera la répartition la mieux adaptée, réception de ce signal de paramétrage.

En revanche, si une unique répartition est définie dans le signal de paramétrage, cette répartition des antennes d'émission sera imposée à l'émetteur.

On remarque qu'un changement dans la répartition des antennes d'émission peut modifier les valeurs de capacité du canal de transmission, obtenues pour chaque groupe, et ainsi, nécessiter de modifier certaines valeurs de rendements attribuées en émission de manière à optimiser les performances de transmission, tout en respectant les rendements discrets disponibles à l'émission.

On considère bien entendu que les groupes d'antennes peuvent être de cardinalité distincte, c'est-à-dire que les différents groupes d'antennes ne comprennent pas nécessairement le même nombre d'antennes d'émission.

On considère également que le nombre maximal d'antennes d'émission dans un groupe ne doit pas dépasser le nombre d'antennes en réception. Ainsi, le nombre d'antennes d'émission dans un groupe est compris entre 1 et $N_R$.

Ainsi, l'invention propose un système prenant en compte l'existence d'une limitation du nombre de rendements de code disponibles à l'émetteur (fixé par la norme d'émission considérée) qui vise à réduire le bruit de quantification.

En particulier, les étapes d'analyse et de transmission sont également mises en oeuvre de façon périodique et/ou en fonction d'une variation significative dudit canal de transmission, c'est-à-dire une variation supérieure à un seuil prédéterminé.

Ces étapes d'analyse et de transmission peuvent également être mises en oeuvre en fonction d'une requête d'un utilisateur, ou encore d'une requête de l'émetteur.

On adapte ainsi la répartition par groupes des antennes d'émission et les rendements attribués à chaque groupe d'antennes de façon à exploiter de manière optimale le système multi-antennes.

Selon une caractéristique particulière de l'invention, ladite étape de détermination détermine des puissances spécifiques allouées respectivement à chacune desdites antennes d'émission, et ledit signal de paramétrage définit également ces puissances.

On adapte ainsi différentes informations d'adaptation, encore appelées paramètres, en fonction d'une information représentative du canal de transmission, et notamment de la qualité de ce canal, de façon à optimiser les performances du système multi-antennes.

Selon un mode de réalisation particulier, le procédé de réception comprend une étape de sélection d'antennes d'émission parmi lesdites $N_T$ antennes d'émission, dites antennes actives, au moins en fonction de ladite information représentative du canal de transmission. Ledit signal de paramétrage définit alors également les antennes actives, c'est-à-dire comprend une information permettant d'identifier les antennes sélectionnées.

Plus précisément, cette étape de sélection d'antennes peut conduire à la désactivation des antennes d'émission non sélectionnées. On balaye ainsi, selon ce mode de réalisation, chaque antenne d'émission du système multi-antennes, et on désactive les antennes présentant par exemple une corrélation trop importante, ou étant associées à un canal de transmission fortement bruité, etc. Cette activation/désactivation des antennes d'émission est notamment mise en oeuvre de manière à optimiser la capacité du système multi-antennes.

Par exemple, le signal de paramétrage peut définir un groupe comprenant l'ensemble des antennes d'émission désactivées, et définir un rendement nul affecté à ce groupe d'antennes d'émission.

En particulier, suivant un tirage de canal particulier, l'algorithme de sélection d'antennes peut suggérer d'utiliser toutes les antennes d'émission à disposition, c'est-à-dire les $N_T$ antennes d'émission.

Selon un aspect particulier de l'invention, l'étape de sélection est mise en oeuvre conjointement avec ladite étape de détermination.

En d'autres termes, l'étape de sélection des antennes actives d'émission tient compte d'au moins certaines informations d'adaptation et vice-versa.

En effet, l'optimisation conjointe de la sélection d'antennes et de l'adaptation des rendements permet notamment d'éviter une dégradation importante de la capacité globale du système multi-antennes, due à la discrétisation des rendements à l'émission.

Par exemple, une répartition ordonnée optimisée $\Gamma^*$, les rendements spécifiques par groupe $R^*$ pour cette répartition, et un ensemble optimisé $S^*$ des antennes actives, peuvent être déterminés à partir des équations suivantes :

$$(S^{\bullet},\Gamma^{\bullet}) = \arg\max_{S,\Gamma} T_{S,\Gamma}$$

$$R^{\bullet} = \bigcup_{i=1}^{K}\left\{r_{\Delta_i}^{\bullet}(S^{\bullet},\Gamma^{\bullet})\right\}$$

avec :

$$T_{S,\Gamma} = \sum_{i=1}^{K} r_{\Delta_i}^{\bullet}(S,\Gamma);$$

$$r_{\Delta_i}^{\bullet}(S,\Gamma) = \arg\min_{r_{\Delta_i}\in J_{|\Delta_i|}} (c_{\Delta_i} - r_{\Delta_i}) \text{ tel que } r_{\Delta_i}^{\bullet}(S,\Gamma) \leq c_{\Delta_i} ;$$

$$c_{\Delta_i} = \log_2 \det\left(\mathbf{I}_{|\Delta_i|} + \Lambda_{\Delta_i}\left(P_1,\cdots,P_{N_T},\mathbf{H},\rho\right)\right);$$

où :

- H est représentatif dudit canal de transmission :
- $\rho$ corresponds au rapport signal à bruit ;
- $\{P_1,\cdots, P_{NT}\}$ correspond à un jeu de puissances d'émission attribuées à chaque antenne d'émission :
- $J_{|\Delta|}$ correspond à un jeu de rendements discrets disponibles à l'émission ;
- $\Delta$ correspond à un groupe inclus dans la répartitions $\Gamma$ ;
- $A_\Delta$ est une matrice représentative dudit récepteur.

Selon un aspect particulier de l'invention, ladite répartition est déterminée en tenant compte d'au moins un des éléments appartenant au groupe comprenant :

- des rendements discrets disponibles à l'émission;
- des puissances associées à chaque répartition en groupes desdites antennes d'émission ;
- un ordre de décodage mis en oeuvre au niveau dudit récepteur ;
- le nombre $N_R$ d'antennes de réception ;
- un nombre d'antennes d'émission actives.

Ainsi, la répartition par groupes des antennes d'émission est adaptée en cours de transmission, par exemple pour mieux suivre les variations du canal de transmission.

En particulier, lors du choix du partitionnement des antennes en émission, il est possible que plusieurs partitions atteignent la capacité maximale du système. La partition optimale est alors choisie de façon à respecter des contraintes matérielles primordiales, telles qu'une complexité de décodage faible, un « feedback » minimal entre le récepteur et l'émetteur, etc.

En particulier, le procédé de réception selon un des modes de réalisation de l'invention met en oeuvre une étape de détermination d'un ordonnancement desdits groupes, et une étape de décodage mise en oeuvre successivement pour chaque groupe suivant ledit ordonnancement.

On joue ainsi sur les degrés de liberté disponibles, par exemple l'ordre de décodage des différents groupes, la façon de partitionner les antennes d'émission par groupes et la distribution des rendements en émission, en tenant compte des schémas de modulation et codage disponibles à l'émission définis par la norme considérée, de façon à réduire l'écart entre les rendements théoriques et les rendements disponibles.

En particulier, un changement dans la répartition par groupes des antennes d'émission nécessite une modification de l'ordonnancement.

Notamment, ledit ordonnancement minimise une métrique tenant compte des répartitions en groupes desdites antennes d'émission et/ou des puissances fournies par lesdites antennes d'émission et/ou des rendements spécifiques et/ou d'un ordre de décodage.

Un autre aspect de l'invention concerne un procédé d'émission d'un signal de données d'un émetteur vers un récepteur via un canal de transmission, ledit émetteur comprenant $N_T$ antennes d'émission et ledit récepteur comprenant $N_R$ antennes de réception, avec $N_T$ et $N_R$ supérieurs ou égaux à 2.

Selon l'invention, un tel procédé d'émission comprend les étapes suivantes :

- réception d'un signal de paramétrage transmis par ledit récepteur définissant :

    ■ au moins une répartitions desdites antennes d'émission en au moins un groupe d'au moins une antenne ;
    ■ des rendements spécifiques affectés respectivement à chacun desdits groupes d'antennes, pour chaque répartition,
    obtenus, en fonction d'une information représentative du canal de transmission, par détermination périodique et/ou fonction d'une variation du canal de transmission,
    au moins un groupe comprenant au moins deux antennes d'émission pour au moins une détermination ;

- sélection d'une desdites répartitions parmi la ou lesdites répartitions définies dans ledit signal de paramétrage ;
- répartition desdites antennes d'émission selon les groupes de ladite répartition sélectionnée ;
- attribution à chacun desdits groupes du rendement spécifique correspondant, défini dans ledit signal de paramétrage.

Un tel procédé d'émission est notamment adapté à recevoir un signal de paramétrage émis par exemple selon le procédé de réception décrit ci-dessus.

Ainsi, ce procédé d'émission est adaptatif et contrôlé par un « feedback » (retour) du récepteur, par exemple lors de la mise à jour des paramètres définis dans le signal de paramétrage.

Dans un autre mode de réalisation, l' invention concerne un dispositif de réception d'un signal reçu, correspondant à un signal de données émis par un émetteur via un canal de transmission, ledit émetteur comprenant $N_T$ antennes d'émission et ledit dispositif de réception comprenant $N_R$ antennes de réception, avec $N_T$ et $N_R$ supérieurs ou égaux à 2.

Selon l'invention, un tel dispositif de réception comprend:

- des moyens d'analyse dudit signal reçu, délivrant une information représentative dudit canal de transmission ;
- des moyens de détermination périodique et/ou en fonction d'une variation dudit canal de transmission :

    ■ d'au moins une répartition desdites antennes d'émission en au moins un groupe d'au moins une antenne, en fonction de ladite information représentative du canal de transmission, au moins un groupe comprenant au moins deux antennes d'émission pour au moins une desdites déterminations;
    ■ des rendements spécifiques affectés respectivement à chacun desdits groupes d'antennes, pour chaque répartition en fonction de ladite information représentative du canal de transmission ;

- des moyens de transmission audit émetteur d'un signal de paramétrage définissant la ou lesdites répartitions et lesdits rendements spécifiques. Un tel dispositif de réception est notamment adapté à mettre en oeuvre le procédé de réception décrit précédemment. Il s'agit par exemple d'une station de base, ou d'un terminal de type radiotéléphone, ordinateur portable, assistant personnel de type PDA (en anglais « Personal Digital Assistant »), selon que l'on soit en lien montant ou descendant.

Un autre aspect de l'invention concerne un dispositif d'émission d'un signal de données vers un récepteur via un canal de transmission, ledit dispositif d'émission comprenant $N_T$ antennes d'émission et ledit récepteur comprenant $N_R$ antennes de réception, avec $N_T$ et $N_R$ supérieurs ou égaux à 2.

Selon l'invention, un tel dispositif d'émission comprend :

- des moyens de réception d'un signal de paramétrage (15) transmis par ledit récepteur définissant :

    ■ au moins une répartition desdites antennes d'émission en au moins un groupe d'au moins une antenne ;
    ■ des rendements spécifiques affectés respectivement à chacun desdits groupes d'antennes, pour chaque répartition ;
    obtenus, en fonction d'une information représentative du canal de transmission, par détermination périodique et/ou fonction d'une variation du canal de transmission,
    au moins un groupe comprenant au moins deux antennes d'émission pour au moins une détermination ;

- des moyens de sélection d'une desdites répartitions parmi la ou lesdites répartitions définies dans ledit signal de paramétrage ;
- des moyens de répartition desdites antennes d'émission selon les groupes de ladite répartition sélectionnée ;
- des moyens d'attribution à chacun desdits groupes du rendement spécifique correspondant, défini dans ledit signal de paramétrage.

Un tel dispositif d'émission est notamment adapté à mettre en oeuvre le procédé d'émission décrit précédemment. Il s'agit par exemple d'une station de base, ou d'un terminal de type radiotéléphone, ordinateur portable, assistant personnel de type PDA (en anglais « Personal Digital Assistant »), selon que l'on soit en lien montant ou descendant.

Encore un autre mode de réalisation de l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de réception décrit ci/dessus, et/ou un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé d'émission décrit ci-dessus.

Finalement, un autre aspect de l'invention concerne un signal de paramétrage d'un émetteur, transmis d'un récepteur à destination dudit émetteur via un canal de transmission, ledit émetteur comprenant $N_T$ antennes d'émission et ledit récepteur comprenant $N_R$ antennes de réception, avec $N_T$ et $N_R$ supérieurs ou égaux à 2.

Selon l'invention, un tel signal de paramétrage comprend au moins un champ de paramétrage comprenant :

- une information relative à au moins une répartition desdites antennes d'émission en au moins un groupe d'au moins une antenne ; et
- une information relative à des rendements spécifiques affectés respectivement à chacun desdits groupes d'antennes, pour chaque répartition,

obtenues, en fonction d'une information représentative dudit canal de transmission, par détermination périodique et/ou en fonction d'une variation du canal de transmission,
au moins un groupe comprenant au moins deux antennes d'émission pour au moins une détermination.

Un tel signal de paramétrage peut notamment définir, selon le procédé de réception décrit précédemment, différents paramètres ou informations d'adaptation mis en oeuvre en émission, comme la répartition des antennes d'émission par groupes, les rendements attribués à chacun des groupes, les antennes sélectionnées (antennes actives), les puissances attribuées à chaque antenne d'émission, ...

Ce signal de paramétrage pourra bien sûr comporter les différentes caractéristiques relatives au procédé de réception selon l'invention.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 illustre les principales étapes du procédé de réception selon l'invention;
- la figure 2 présente un exemple de structure de signal de paramétrage :
- la figure 3 illustre un exemple de dispositif d'émission dans un système de transmission multi-antennes selon l'invention ;
- les figures 4 et 5 présentent respectivement la structure d'un dispositif d'émission et d'un dispositif de réception selon un mode de réalisation particulier de l'invention ;
- la figure 6 illustre les principales étapes de la technique S-PARC, décrite en relation avec l'art antérieur ;
- la figure 7 propose un exemple de dispositif de réception dans un système de transmission multi-antennes selon l'invention ;
- la figure 8 illustre les principales étapes de la sélection d'antennes actives d'émission conjointement à la détermination des informations d'adaptation ; et
- la figure 9 propose un algorithme pour la sélection des antennes actives.

**5. Description d'un mode de réalisation de l'invention**

*5.1 Principe général*

Le principe général de l'invention repose sur la transmission, d'un récepteur à un émetteur dans un système MIMO comprenant au moins deux antennes d'émission et au moins deux antennes de réception, d'un signal de paramétrage permettant de définir des informations d'adaptation, côté émission, comprenant au moins :

- au moins une répartition en un ou plusieurs groupes des antennes d'émission, et
- des rendements spécifiques attribués à chacun des groupes d'antennes d'émission, pour chaque répartition.

On considère ainsi une répartition adaptative des antennes d'émission, c'est-à-dire que d'une remontée d'information du récepteur vers l'émetteur à une autre (« feedback » du récepteur), le choix de la partition peut différer, permettant ainsi de s'adapter aux variations du canal de transmission.

En particulier, le « feedback » du récepteur peut soit comprendre une unique répartition en groupes, et imposer ainsi son choix à l'émetteur, soit comprendre plusieurs répartitions envisageables, et laisser alors à l'émetteur le choix de la répartition optimisée parmi ces répartitions envisageables.

Ainsi, l'intérêt de grouper les antennes d'émission selon ce mode de réalisation particulier de l'invention réside dans une meilleure adaptation des rendements disponibles compte tenu d'un choix optimisé de répartition.

De plus, selon une variante de réalisation décrite par la suite, le signal de paramétrage peut également définir les puissances allouées par antenne, ce qui permet une meilleure adaptation aux rendements disponibles.

La modification des puissances d'émission implique par la suite l'obtention de nouvelles valeurs de capacités pour chaque groupe d'antennes, ce qui peut nécessiter une modification de l'ordonnancement (encore appelé ordre de décodage) choisi de façon à conserver un système multi-antennes optimisé.

Par principe, il faut veiller à ce que la distribution de puissance par antenne d'émission ne dégrade pas trop la capacité du système multi-antennes. Par conséquent, il est souhaitable de définir une plage maximale de variations autour d'une valeur moyenne de puissance associée à chaque antenne d'émission et un pas de quantification.

Selon une autre variante, le signal de paramétrage peut également définir les antennes actives et celles non actives.

Selon encore une autre variante, on se place dans un contexte de feedback réduit, en ne considérant pas l'adaptation des puissances d'émission. On considère ainsi une puissance prédéterminée, et équidistribuée entre les différentes antennes d'émission (actives), en l'absence de connaissance du canal en émission.

On s'attache ci-après à décrire plus précisément un mode de réalisation particulier de l'invention, selon lequel un signal de données est transmis d'un émetteur comprenant $N_T$ antennes d'émission vers un récepteur comprenant $N_R$ antennes de réception via un canal de transmission, avec $N_T$ supérieur ou égal à 2 et $N_R$ supérieur ou égal à 2.

Plus précisément, selon ce mode de réalisation particulier, le récepteur détermine une unique répartition par groupes des antennes d'émission, et des rendements spécifiques affectés à chaque groupe, en fonction d'une information représentative du canal de transmission (par exemple une estimation du canal de propagation ou des rapports SNR (signal à bruit)), et transmet ces informations d'adaptation à l'émetteur au moyen du signal de paramétrage.

On considère notamment que selon ce mode de réalisation de l'invention, le nombre maximal d'antennes d'émission dans un groupe ne doit pas dépasser le nombre d'antennes actives en réception. Cette contrainte provient notamment du blanchiment spatial de la sortie du détecteur vectoriel MMSE.

Plus précisément, on considère un « rendement» correspondant à un choix de modulation et codage espace-temps (ST-MCS), c'est-à-dire qu'il définit le rendement global du code espace-temps. Autrement dit, le rendement du code espace-temps comprend le rendement du code de canal et l'ordre de la modulation choisie (par exemple, une ST-BICM utilisant quatre antennes d'émission et un code convolutif de rendement 1/3 avec une modulation QPSK possède un rendement global de $4 \times \dfrac{1}{3} \times 2$).

On rappelle qu'il est souhaitable de choisir des codes espace-temps capables d'approcher la capacité de Shannon.

Ainsi, on propose selon ce mode de réalisation une détection (spatio-temporelle) des flux associés à chaque groupe d'antennes d'émission basée sur une annulation successive d'interférence.

Plus précisément, on rappelle que l'invention ne se limite pas à une détection du type MMSE par groupe d'antennes utilisant une annulation successive d'interférences, mais prend l'hypothèse que les capacités par groupe calculées proviennent d'un détecteur par groupe quelconque, basé sur une annulation successive d'interférence, pour lequel une formule de capacité pour chaque groupe peut être obtenue en fonction de l'estimation de canal.

Ainsi, l'invention trouve aussi bien des applications dans des systèmes présentant des canaux de transmission sélectifs en fréquence (systèmes de type monoporteuse) que dans des systèmes présentant des canaux non sélectifs en fréquence (systèmes de type multiporteuses).

*5.2 Côté réception*

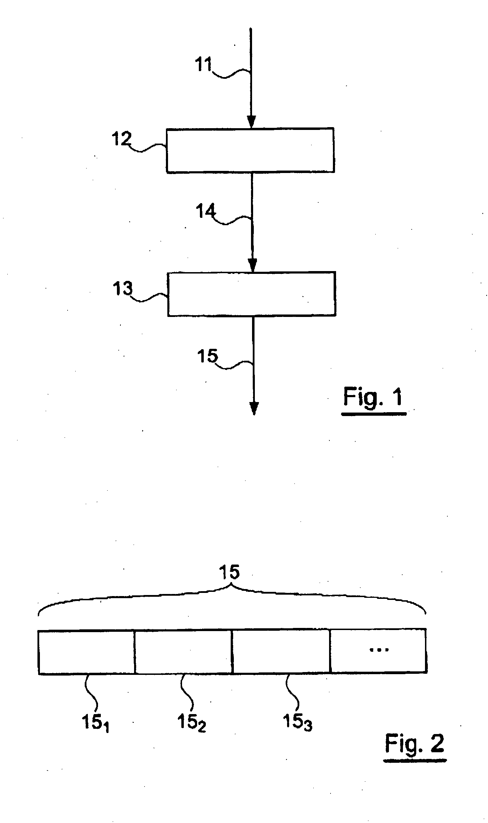

On présente ainsi, en relation avec la figure 1, le principe général du procédé de réception selon un mode de réalisation particulier de l'invention.

On considère par exemple un signal reçu 11, correspondant au signal de données émis après passage dans le canal de transmission.

Plus précisément, au cours d'une première étape 12, le signal reçu 11 est analysé, de façon à obtenir au moins une information 14 représentative du canal de transmission. Cette information 14 correspond par exemple à une estimation du canal de transmission entre l'émetteur et le récepteur.

Cette information 14 est notamment utilisée, au cours d'une deuxième étape 13, pour construire un signal de paramétrage 15, permettant de définir une répartition des $N_T$ antennes d'émission en groupes d'antenne(s), et des rendements spécifiques affectés respectivement à chacun des groupes d'antennes.

Le signal de paramétrage 15 est ensuite transmis à l'émetteur du système MIMO, par exemple sous la forme d'un message CQI.

Plus précisément, la figure 7 illustre sous forme simplifiée un dispositif de réception comprenant $N_R$ antennes de réception, selon cet exemple de réalisation.

Ce dispositif de réception comprend des moyens d'analyse (71) du signal reçu, à partir d'une estimation du canal de transmission par exemple, des moyens de détermination (72) d'une répartition des antennes d'émission et des rendements spécifiques affectés à chaque groupe, et des moyens de décodage (73) du paquet transmis.

En particulier, selon une variante de réalisation de l'invention, ces moyens de détermination (72) effectuent conjointement une sélection des antennes en émission et/ou en réception, permettant de désactiver certaines antennes d'émission et/ou de réception. Plus précisément, le sous-ensemble d'antennes actives en émission et/ou en réception est choisi, parmi toutes les combinaisons possibles, de manière à maximiser par exemple la somme capacité discrète du système de transmission ou la capacité globale (c'est à dire sans prise en compte de la quantification des rendements) du système. L'optimisation s'effectue ainsi sur tous les liens radio.

L'utilisation d'un algorithme de sélection des antennes d'émission permet notamment d'offrir de meilleures performances au système de transmission, puisque la puissance n'est pas gaspillée en émettant sur des liens fortement perturbés, par exemple des liens radio faibles.

De plus, l'utilisation d'un tel algorithme est avantageuse pour des canaux MIMO à évanouissements corrélés, ou des canaux MIMO à évanouissements non corrélés présentant plus d'antennes en émission qu'en réception ($N_T > N_R$).

On rappelle également que la sélection en réception permet essentiellement de diminuer la complexité du traitement du récepteur.

Ainsi, les informations d'adaptation (telles que le partitionnement des antennes en émission, les puissances allouées, les rendements utilisés en pratique (inférieurs ou égaux à ceux calculés) ainsi que l'ordre de décodage) sont définies soit conjointement au nombre d'antennes actives du canal MIMO, soit une fois le nombre d'antennes actives déterminé. Le traitement corrélé de ces différentes informations permet notamment de diminuer le bruit de quantification et donc de permettre l'augmentation des performances en termes d'efficacité spectrale.

La puissance d'émission peut notamment être prédéterminée et équidistribuée entre les différentes antennes d'émission actives.

Cette variante de réalisation selon laquelle on détermine de manière corrélée la sélection d'antennes d'émission, la détermination de la répartition, la détermination des rendements affectés à chacun des groupes d'antennes, et éventuellement l'optimisation de l'ordre de décodage (c'est-à-dire en tenant compte conjointement de l'ensemble de ces informations), est décrite plus en détail par la suite.

Au moins certaines de ces informations d'adaptation sont ensuite remontées à l'émetteur sous la forme d'un signal de paramétrage (message CQI). L'émetteur est alors capable de s'adapter à la partition optimale choisie, ainsi qu'aux rendements à utiliser pour la transmission d'un paquet de données.

Côté récepteur, le décodage du paquet transmis est mis en oeuvre suivant l'ordre de décodage choisi après l'estimation de canal et avant la transmission du paquet.

Plus précisément, la figure 2 illustre un exemple de structure du signal de paramétrage 15.

Ce signal comprend au moins un premier champ de paramétrage $15_1$, comprenant une information relative à une répartition en groupe des antennes d'émission, et un deuxième champ de paramétrage $15_2$, comprenant une information relative à des rendements spécifiques affectés respectivement à chacun des groupes d'antennes d'émission.

Par ailleurs, ce signal de paramétrage 15 peut également comprendre un champ $15_3$ portant une information relative à des puissances spécifiques allouées respectivement à chacune des antennes d'émission, ou encore un champ (non représenté) portant une information relative aux antennes actives d'émission.

*5.3 Côté émission*

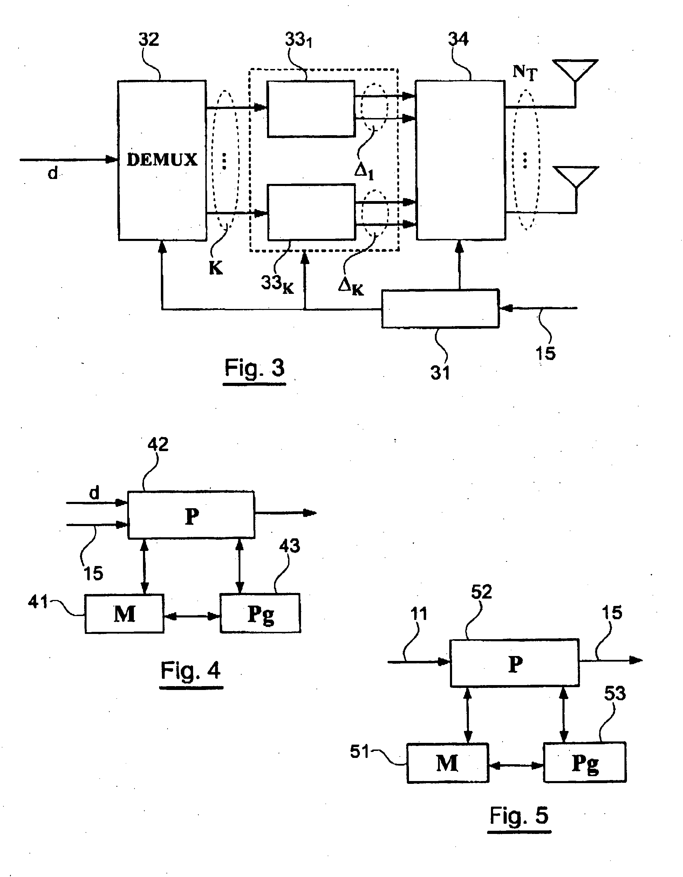

La figure 3 illustre plus précisément le fonctionnement côté émission. Comme illustré sur cette figure 3, le signal de paramétrage 15 transmis par te récepteur est reçu par l'émetteur du système multi-antennes.

Au cours d'une étape de contrôle 31, les différents champs du signal de paramétrage 15 sont analysés, de façon à adapter l'émetteur, en définissant au moins la répartition des antennes d'émission par groupe et les rendements associés à chaque groupe.

Ainsi, après réception des informations d'adaptation provenant du récepteur, l'émetteur est notamment capable de s'adapter à la partition pour l'instant de transmission $t$, ainsi qu'aux rendements par groupe. Une fois le choix de la partition effectué, le module de contrôle 31 permet de reconfigurer un démultiplexeur 32 en $K$ sorties, puis d'appliquer un module de code espace-temps sur chacune de ces sorties. En particulier, une fois que la partition est choisie, le module de contrôle 31 détermine les antennes d'émission appliquées à chaque groupe. Par exemple, en considérant un système multi-antennes comprenant $N_T = 6$ antennes d'émission, notées $N_{T_1}, N_{T_2}, ..., N_{T_6}$, et considérant une partition numérotée $\chi$ comprenant trois groupes ($K=3$), dont un premier groupe $\Delta_1$ comprenant trois antennes d'émission, un deuxième groupe $\Delta_2$ comprenant une antenne d'émission, et un troisième groupe $\Delta_3$ comprenant deux antennes d'émission, alors le module de contrôle choisit par exemple $(N_{T_3}, N_{T_6}) \in \Delta_1$, $(N_{T_1}, N_{T_2}) \in \Delta_2$ et $(N_{T_5}) \in \Delta_3$, cette répartition permettant d'optimiser les performances du système multi-antennes.

Plus précisément, le flux de données binaires d en entrée de l'émetteur est tout d'abord démultiplexé au cours d'une étape DEMUX 32, et converti en un nombre de flux indépendants $K$ correspondant au nombre de groupes d'antennes d'émission défini dans le signal de paramétrage 15 et extrait au cours de l'étape de contrôle 31.

Selon cet exemple, les $K$ flux sont chacun séparément encodés et mappés dans un bloc codage et modulation MCS $33_1, ...., 33_K$. Plus précisément, les blocs MCS peuvent être de type ST-MCS (de l'anglais « Space-Time Modulation and Coding Scheme »), comme par exemple le codage espace-temps utilisant une modulation de type ST-BICM (de l'anglais « Space Time Bit Interleaved Coded Modulation »).

En particulier, ce schéma de codage et modulation repose sur un code scalaire, et se décompose en trois modules successifs comprenant:

- un codeur (mettant par exemple en oeuvre un code LDPC) ;
- un entrelaceur binaire : et
- un modulateur (mettant par exemple en oeuvre une modulation d'amplitude en quadrature QAM16).

Les schémas de codage et modulation $33_1, .... 33_K$, contrôles par le contrôleur 31 tenant compte du signal de paramétrage 15, permettent ainsi de définir des rendements spécifiques affectés respectivement à chacun des groupes d'antennes d'émission $\Delta_1, ... \Delta_K$. Selon une variante de réalisation, ces schémas permettent également de définir des puissances spécifiques allouées respectivement à chacune des antennes d'émission.

Finalement, les blocs codage et modulation $33_1, ..., 33_K$ sont suivis d'un commutateur 34 (encore appelé démultiplexeur) effectuant une bijection de l'ensemble des flux de données sur l'ensemble des antennes actives.

En particulier, l'utilisation d'un tel schéma pour les codes espace-temps permet d'obtenir facilement des familles de codes de cardinalité strictement supérieure à 1. En effet, il suffit de multiplier la cardinalité souhaitée avec les rendements scalaires pour obtenir ces familles de codes espace-temps.

Coté récepteur, le décodage des données s'effectue par couche pour chaque groupe $\Delta_1, ..., \Delta_K$ d'antennes.

Plus précisément, à partir des échantillons reçus, la première couche est détectée vectoriellement (détecteur vectoriel basé par exemple sur un critère MMSE), puis décodée. Ainsi, l'ordre de décodage $j$ peut prévoir de décoder le groupe $\Delta_1$ lors d'une première couche, puis de décoder le groupe $\Delta_K$ lors d'une couche suivante.

Après le décodage d'une couche, le signal est ré-encodé puis les interférences sont régénérées pour ensuite être soustraites au signal multiplexé reçu. On réalise donc une suppression d'interférences successive vectorielle.

On rappelle que selon ce mode de réalisation de l'invention, le nombre maximal d'antennes d'émission dans un groupe ne doit pas dépasser le nombre d'antennes actives en réception. Cette contrainte provient notamment du blanchiment spatial de la sortie du détecteur vectoriel MMSE.

*5.4 Détermination des informations d'adaptation*

On considère ci-après un premier mode de réalisation dans lequel la détermination des informations d'adaptation est effectuée après la sélection des antennes actives d'émission.

Plus précisément, la détermination d'un ordre de décodage optimal s'appuie sur une minimisation d'une métrique $M_{j,\chi}$ associée aux partitions choisies $\{X_1, .., X_M\}$, aux puissances fournies par antenne $\{P_1, .., P_{N_T}\}$, et à un ordre de décodage $j$, notée $M_{j^*, \chi^*}$, compte tenu des familles de codes disponible à l'émission :

$$M_{j^*,\chi^*} = \min_{j,\chi} M_{j,\chi}\left(P_1^*,...,P_{N_T}^*, R_{k_{1,j}^*}^{|\Delta_1|},...,R_{k_{K,j}^*}^{|\Delta_K|}\right) \quad (1)$$

On rappelle que les familles de codes espace-temps (STC) disponibles à l'émission imposent les cardinalités potentielles des groupes d'antennes d'émission, et qu'aucun groupe ne peut comporter plus d'antennes d'émission que d'antennes actives en réception.

Les informations à transmettre à destination de l'émetteur peuvent alors s'exprimer sous la forme :

$$\left\{k_{1,j}^{\chi^*},...,k_{K,j}^{\chi^*},\chi^*\right\} = \left\{CQI_1,...,CQI_K,CQI_{K+1}\right\}$$

et l'ensemble des puissances $\left\{P_1^*,...,P_{N_T}^*\right\}_{j^*,\chi^*}$ où :

$$\left\{\begin{array}{l}
M_{j,\chi}\left(P_1^*,...,P_{N_T}^*, R_{k_{1,j}^*}^{|\Delta_1|},...,R_{k_{K,j}^*}^{|\Delta_K|}\right) \\[2em]
= F\left(c_{\Delta_1,j}(P_1^*,...,P_{N_T}^*),...,c_{\Delta_K,j}(P_1^*,...,P_{N_T}^*), R_{k_{1,j}^*}^{|\Delta_1|},...,R_{k_{K,j}^*}^{|\Delta_K|}\right) \quad (2) \\[2em]
\left\{\left\{P_1^*,...,P_{N_T}^*\right\}, k_{1,j}^*,...,k_{K,j}^*\right\} \\[2em]
= \arg\min_{k_1,...,k_K, P_1,...,P_{N_T}} F\left(c_{\Delta_1,j}(P_1,...,P_{N_T}),...,c_{\Delta_K,j}(P_1,...,P_{N_T}), R_{k_1}^{|\Delta_1|},...,R_{k_K}^{|\Delta_K|}\right) \quad (3) \\[2em]
\displaystyle\sum_{i=1}^{N_T} P_i = P \quad \text{et} \quad \sum_{i=1}^{N_T}\left|P_i - P_i^0\right|^2 \le \varepsilon \quad (4)
\end{array}\right.$$

avec

$$c_{\Delta_i,j}(P_1,...,P_{N_T}) \ge R_{k_i}^{|\Delta_i|}, \forall i \in \left[1,K\right]$$

avec les notations suivantes :

- $N_r$ le nombre d'antennes d'émission;
- $n_r$ le nombre d'antennes d'émission actives, $n_r \le N_r$ ;
- $N_R$ le nombre d'antennes de réception actives ;
- $\chi$ le numéro de la partition X={$\Delta_1,...,\Delta_\kappa$} des antennes d'émission actives ;
- $|\Delta_i|$ la cardinalité du groupe d'antennes $\Delta_i$ ;
- $\kappa$ le nombre de groupes d'antennes d'émission associé à la partition numérotée $\chi$.

Les relations citées en (4) permettent notamment de respecter certaines contraintes pratique. En effet, la première $\sum_{i=1}^{N_T} P_i = P$ implique de respecter la puissance disponible à l'émetteur. Par conséquent, faire varier une des valeurs d'un jeu de puissances conduit à modifier au moins une autre valeur de ce même jeu de puissances. Quant à la deuxième contrainte $\sum_{i=1}^{N_T} |P_i - P_i^0|^2 \leq \varepsilon$, son but est de limiter les variations de puissances afin de préserver la capacité d'une trop forte dégradation.

Notons $\{X_1,...,X_M\}$ l'ensemble des partitions considérées vérifiant la condition suivante :

$$\forall X, \forall \Delta_i \in X \text{ où } i \in [1, K] \text{ on a } |\Delta_i| \leq N_R \quad .$$

De plus, soit $J_l = \{R_1^l,...,R_{N_l}^l\}$ la famille de $N_l$ rendements discrets disponibles pour les groupes $|\Delta_i|=l$, $l \geq 2$ correspondant à un code espace-temps comprenant $l$ antennes en émission. On note que la famille où $l = 1$ correspond à un codage scalaire classique.

$C_{\Delta_i,j}$ correspond ainsi au rendement (continu) obtenu pour le groupe d'antennes $\Delta_t$ par rapport à l'ordre de décodage $j$.

$R_{k_{i,j}}^{|\Delta_i|}$ est le rendement choisi parmi les rendements de cardinalité $|\Delta_i|$ disponibles pour le groupe $i$ et pour la partition donnée numérotée $\chi$.

Ainsi, à chaque partition ordonnée $\Gamma$ (c'est-à-dire à une valeur de $\chi$ et $j$ donnée), la métrique $M_{j,\chi}$ est calculée à partir d'une métrique $F$. Cette métrique $F$ est fonction des rendements théoriques (pouvant prendre n'importe quelle valeur), conditionnés par leur capacité, elle-même fonction du jeu de puissances $\{P_1,...,P_{N_T}\}$ allouées à chaque antenne en émission et des rendements sélectionnés parmi ceux disponibles.

Le choix des rendements est effectué par une minimisation à la fois sur les puissances d'émission et sur les indices $k$ permettant de choisir le rendement discret le plus proche de celui théorique.

Finalement, une fois toutes les valeurs $M_{j,\chi}$ calculées, celle qui est minimale $M_{j^*,\chi^*}^*$ est retenue, et avec elle l'ordonnancement $j^*$ et la partition numérotée $\chi^*$ associés.

La recherche de la métrique minimale s'effectue donc selon ce mode de réalisation sur l'ensemble des permutations des décodages ordonnés successifs, sur l'ensemble des jeux de puissances et sur l'ensemble des partitions à considérer.

Finalement, l'émetteur est informé de la partition choisie, et du choix des rendements à utiliser pour chaque groupe d'antennes appartenant à la partition choisie. En revanche, l'ordre du décodage n'a pas besoin d'être transmis à l'émetteur, puisque cette information n'est utilisée qu'au niveau du récepteur.

En particulier, on peut résoudre le problème de l'identifcation des antennes actives en élargissant la partition au nombre total d'antennes disponibles à l'émission, et en choisissant un CQI associé à un rendement nul pour le groupe comprenant les antennes inactives.

*5.5 Cas particuliers*

On présente ci-après plusieurs cas particuliers de mise en oeuvre de la technique selon ce premier mode de réalisation de l'invention.

Tout d'abord, selon un premier aspect, la métrique $F$ peut prendre la forme d'une métrique euclidienne avec contrainte.

Ainsi, en reprenant les équations précédentes, le membre de droite de l'équation (3) peut être particularisé de la manière suivante :

$$F\left(c_{\Delta_1,j}(P_1,...,P_{N_T}),...,c_{\Delta_K,j}(P_1,...,P_{N_T}),R_{k_1}^{|\Delta_1|},...,R_{k_K}^{|\Delta_K|}\right)$$
$$= \sum_{i=1}^{K} \left|c_{\Delta_i,j}(P_1,...,P_{N_T}) - R_{k_i}^{|\Delta_i|}\right|^2 \quad (5)$$

avec :

$$c_{\Delta_i,j}(P_1,\dots,P_{N_T}) \geq R_{k_i}^{|\Delta_i|}$$

Selon un deuxième aspect, on cherche à réduire le feedback en fixant un ou plusieurs degrés de liberté du système général. Le fait de fixer certains degrés de liberté permet de ne pas remonter les informations correspondantes à l'émetteur. On liste ci-après quelques exemples, à titre purement illustratif :

1. Selon un premier exemple, on considère que les puissances sont uniformément distribuées entre les différentes antennes d'émission à l'intérieur de chaque groupe. Dans cette configuration, le jeu de puissances par antenne se réduit à un jeu de puissances par groupe, défini par $\{P_{\Delta_1},\dots,P_{\Delta_K}\}$. Les équations (1), (2) et (3) proposées précédemment se réécrivent donc directement avec ce jeu restreint de puissances.

2. Selon un deuxième exemple, toutes les puissances sont fixées a priori à $\left\{P_1^0,\dots,P_{N_T}^0\right\}$. Dans cette configuration, l'équation (3) devient :

$$\left\{k_{1,j}^{*},\dots,k_{K,j}^{*}\right\} = \arg\min_{k_1,\dots,k_K} F\left(c_{\Delta_1,j}(P_1^0,\dots,P_{N_T}^0),\dots,c_{\Delta_K,j}(P_1^0,\dots,P_{N_T}^0),R_{k_1}^{|\Delta_1|},\dots,R_{k_K}^{|\Delta_K|}\right) \quad (6)$$

où le jeu de puissance fixé à priori vérifie $\sum_{i=1}^{N_T} P_i^0 = P$. On rappelle qu'une telle condition assure une bonne capacité globale du système MIMO en moyenne (distribution uniforme par exemple).

En particulier, dans le cas où la métrique considérée est euclidienne, l'équation (6) précédente se simplifie, conduisant à :

$$\begin{cases} M_{j,\chi} = \sum_{i=1}^{K} \left| c_{\Delta_i,j} - R_{k_{i,j}^{*}}^{|\Delta_i|} \right|^2 & (7) \\[2mm] k_{i,j}^{*} = \arg\min_{k_i} \left| c_{\Delta_i,j} - R_{k_i}^{|\Delta_i|} \right|^2 \quad \forall i = 1,\dots,K & (8) \\[2mm] \text{avec} \quad c_{\Delta_i,j} \geq R_{k_i}^{|\Delta_i|} & (9) \end{cases}$$

L'équation (8) s'exprime ainsi plus simplement, puisque la minimisation s'effectue sur chaque élément de la partition à une permutation *j* fixée, alors que dans la situation précédente (5) la, minimisation était effectuée conjointement sur tous les éléments de la partition.

On constate ainsi que la diminution du bruit de quantification est d'autant plus grande que le nombre de partitions possibles est important.

*5.6 Algorithme conjoint de sélection des antennes actives*

On considère ci-après un deuxième mode de réalisation dans lequel la détermination des informations d'adaptation est effectuée conjointement à la sélection des antennes actives d'émission. Autrement dit, la sélection des antennes actives d'émission tient compte d'au moins certaines informations d'adaptation et vice-versa.

Plus précisément, on décrit ci-après un algorithme de sélection des antennes actives d'émission, permettant de sélectionner conjointement un sous-ensemble de $n_T$ antennes d'émission parmi les $N_T$ antennes d'émission, une partition des antennes d'émission, un ordre de décodage optimal, ainsi que les rendements discrets (MCS) optimisés $(n_T \leq N_T)$.

Comme illustré en figure 8. le récepteur effectue selon ce deuxième mode de réalisation, au cours d'une étape 82, une sélection des antennes d'émission conjointement au choix de la partition, à l'ordre de décodage, et aux schémas de modulation et de codage.

En particulier, le récepteur peut connaître une table de MCS à utiliser (83), qu'il peut utiliser pour construire le signal de paramétrage.

Le signal de paramétrage est alors transmis vers l'émetteur (84).

Ce traitement conjoint peut notamment être effectué en réception, afin de limiter le nombre de CQI remontés à l'émetteur, et donc de diminuer le feedback.

En particulier, il est noter que la sélection d'antennes d'émission n'entraîne pas d'augmentation de la quantité d'information dans la voie de retour (« feedback » du récepteur), notamment si le MCS de rendement nul est compris dans la table des MCS et si l'on suppose que l'on affecte un rendement nul aux antennes désactivées.

On suppose dans la suite de ce paragraphe que le canal de transmission est parfaitement estimé.

L'algorithme de sélection d'antennes s'appuie sur la maximisation de la somme capacité discrète reposant sur la connaissance :

- du canal de transmission H en réception :
- du rapport signal à bruit SNR $\rho$ ;
- des puissances d'émission par antenne, fixées à $\{P_1,\cdots, P_{N_T}\}$ respectant la contrainte de puissance P disponible à

l'émetteur $\sum_{i=1}^{N_T} P_i = P$ ; et

- du jeu de rendements discrets disponibles $J = \{\{J_1\}, \{J_2\},\cdots\}$ où $\{J_1\}$ est le jeu de MCS disponibles, $\{J_2\}$ celui des ST-MCS de cardinalité 2, etc...

Le critère de sélection conjointe des antennes d'émission (ensemble optimisé des antennes actives noté $S^*$, dont la cardinalité est inférieure ou égale au nombre d'antennes d'émission) avec l'adaptation des rendements par groupe R* et la partition ordonnée optimisée $\Gamma^*$ peut s'exprimer par : $(S^*,\Gamma^*) = \arg\max_{S,\Gamma} T_{S,\Gamma}$ .

On obtient alors :

$$R^* = \bigcup_{i=1}^{K}\left\{r_{\Delta_i}^*(S^*,\Gamma^*)\right\} \qquad (10)$$

avec la somme capacité discrète :

$$T_{S,\Gamma} = \sum_{i=1}^{K} r_{\Delta_i}^*(S,\Gamma) \qquad (11)$$

qui repose sur l'attribution des rendements discrets.

Par suite, en utilisant les notations suivantes :

- $N_T$ le nombre d'antennes d'émission :
- $n_T$ le nombre d'antennes d'émission actives ($n_T \leq N_T$) ;
- $N_R$ le nombre d'antennes de réception actives ;
- S l'ensemble des antennes d'émission activées, tel que $S \subseteq \{1,\cdots,N_T\}$, avec $d$ la cardinalité de l'ensemble $S : d = |S|$ ;
- $\Gamma$ la partition ordonnée des $d$ antennes d'émission contenues dans l'ensmble $S$ en $K$ groupes disjoints $\Delta$ tels que $\forall i, \forall j \neq i$, on a $\Delta_i \cap \Delta j = \emptyset$, défini par $\Gamma=\{\Delta_l,\cdots,\Delta_K\}$ (l'ordre correspond à l'ordre de décodage) :
- $\Delta$ un groupe inclus dans la partition $\Gamma$ de $|\Delta|$ entiers $\{\delta_1,...,\delta_{|\Delta|}\}$ ;
- R l'ensemble ordonné des rendements discrets choisis ; et
- $T_{S,\Gamma}$ la somme capacité discrète maximale atteignable pour une réalisation donnée de H, S et $\Gamma$, étant donné la famille de ST-MCS disponible à l'émission ;
  on obtient:

$\forall \Gamma$ partition de $S$, $\forall \Delta, \in \Gamma$,

$$r_{\Delta_i}^{\bullet}(S,\Gamma) = \arg\min_{r_{\Delta_i} \in \mathcal{A}_{|\Delta_i|}} (c_{\Delta_i} - r_{\Delta_i}) \quad \text{tel que} \quad r_{\Delta_i}^{\bullet}(S,\Gamma) \le c_{\Delta_i} \qquad (12)$$

avec $c_{\Delta_i}$ la capacité théorique par groupe d'antennes d'émission (ou couche):

$$c_{\Delta_i} = \log_2 \det\left( \mathbf{I}_{|\Delta_i|} + \mathbf{A}_{\Delta_i}\left( P_1, \cdots, P_{N_T}, \mathbf{H}, \rho \right) \right) \qquad (13)$$

D'un point de vue de la théorie de l'information, le récepteur basé sur un critère MMSE combiné à une soustraction d'interférences successives avec contrôle de rendement par groupe est optimal, sous l'hypothèse d'entrées gaussiennes indépendantes.

L'extension de cet algorithme de sélection à un autre récepteur, non nécessairement optimal, est évidemment envisageable.

En particulier, on note que les matrices $A_{\Delta_i}$ prennent une forme différente en fonction du choix retenu pour le récepteur. Suivant le type de récepteur considéré, ces matrices peuvent être calculées grâce à la connaissance du canal de transmission en réception, ou bien obtenues par estimation sur les symboles pilotes.

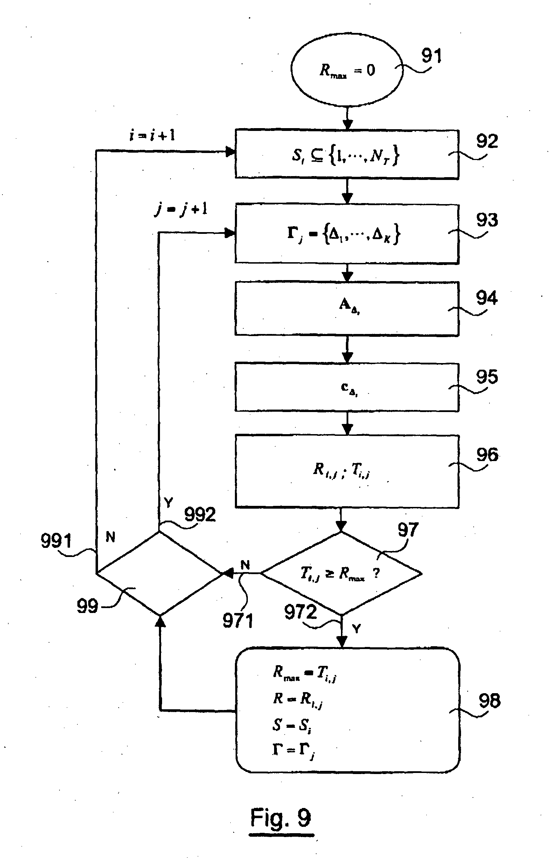

Par exemple, la figure 9 présente un algorithme de sélection d'antennes d'émission, corrélé à l'adaptation des rendements.

On considère pour ce faire que l'algorithme de sélection d'antennes prend en compte deux entrées : une information sur le canal de transmission (par exemple de type estimée du canal de transmission), et un ensemble de jeu de rendements discrets (table des MCS (éventuellement ST-MCS) à considérer).

Au cours d'une étape d'initialisation 91, on initialise la variable $R_{\max}$, correspondant au rendement maximum que l'on peut atteindre, à la valeur « 0 ».

Ensuite, pour chaque $i$ ($i$ entier) tel que l'ensemble des antennes d'émission est $S_i \subseteq \{1,..., N_T\}$ (étape 92), et pour chaque $j$ ($j$ entier) tel que la partition ordonnée $\Gamma_j$ de l'ensemble $S_i$ possède K groupes $\Gamma_j = \{\Delta_1, \cdots, \Delta_K\}$ (étape 93), on calcule au cours d'une étape 94 les matrices $A_{\Delta_t}$ suivant le récepteur considéré pour chaque groupe d' antennes $\Delta_t$, pour $t = 1$ à $K$.

On détermine ensuite au cours d'une étape 95 les capacités correspondantes : $c_{\Delta_t} = \log_2 \det (\mathbf{I}_{|\Delta t|} + A_{\Delta_t})$.

Au cours d'une étape 96 suivante, les rendements discrets $R_{ij}$ sont alloués $R_{i,j} = \bigcup_{t=1}^{K}\left\{ \left\lfloor c_{\Delta_t} \right\rfloor \right\}$, et la somme capacité discrète est déterminée : $T_{i,j} = \sum_{t=1}^{K} \left\lfloor c_{\Delta_t} \right\rfloor$.

Finalement, on compare la somme capacité discrète $T_{i,j}$ et le rendement maximum $R_{max}$, au cours d'une phase de test 97.

Si la condition $T_{t,j} \ge R_{\max}$ est vérifiée (972) alors on pose $R_{\max} = T_{i,j}$, et l'algorithme de sélection stocke les valeurs suivantes (98) :

- $S$ l'ensemble des antennes d'émission sélectionnées, tel *que $S = S_t$* ;
- $R$ l'ensemble ordonné des rendements correspondants, tel que $R = R_{i,j}$ ;
- $\Gamma$ la partition ordonnée choisie, telle que $\Gamma = \Gamma_j$ ;

puis on passe à une étape 99, décrite ci-après.

Si la condition $T_{i,j} \ge R_{\max}$ n'est pas vérifiée (971) alors on passe à l'étape 99. On teste au cours de cette étape 99 si une autre partition est possible. Si oui (992), on incrémente la variable $j$ ($j = j + 1$), et on retourne à l'étape 93. Sinon (991), on incrémente la variable $i$ ($i = i + 1$), et on retourne à l'étape 92.

Cet algorithme, encore appelé premier algorithme, est notamment repris dans l'annexe A, qui fait partie intégrante de la présente description.

En particulier, il est à noter que la discrétisation de la capacité par flux (c'est-à-dire la capacité pour un des groupes d'antennes d'émission considéré) sur l'ensemble des (ST-)MCS disponibles est réalisée dans l'algorithme de sélection grâce à l'opérateur $\lfloor \cdot \rfloor$ (partie entière), qui permet de choisir le plus proche MCS (ou ST-MCS) par valeur inférieure.

On présente ci-après quelques exemples de réalisation particulière de l'algorithme de sélection :

*(i) Premier exemple*

On considère par exemple que le récepteur est basé sur un critère MMSE suivi d'une succession d'interférences. La matrice $A_{\Delta_i}$ peut alors s'écrire sous la forme suivante :

$$\mathbf{A}_{\Delta_i} = \rho \Theta_{\mathbf{x}_{\Delta_i}} \mathbf{H}_{\Delta_i}^\dagger \left( \mathbf{I}_{N_R} + \rho \sum_{j>i}^{K} \mathbf{H}_{\Delta_j} \Theta_{\mathbf{x}_{\Delta_j}} \mathbf{H}_{\Delta_j}^\dagger \right)^{-1} \mathbf{H}_{\Delta_i} \qquad (14)$$

avec :

- $\mathbf{H}_\Delta$ les $|\Delta|$ colonnes de la matrice de canal $\mathbf{H}$ telles que

$$\mathbf{H}_\Delta = \left[ \mathbf{h}_{\delta_1}, \cdots, \mathbf{h}_{\delta_{|\Delta|}} \right] ;$$

- $\Theta_\mathbf{x}$ la matrice de covariance du signal d'émission $\mathbf{x}$, $\Theta_\mathbf{x} = diag\{P_1, \cdots, P_d\}$ :
- $\Theta_{\mathbf{x}\Delta}$ les $|\Delta|$ éléments diagonaux de la matrice $\Theta_\mathbf{x}$ tels que

$$\Theta_{\mathbf{x}_\Delta} = diag\left\{ P_{\delta_1}, \cdots, P_{\delta_{|\Delta|}} \right\}$$

et
- $\dagger$ dénote l'opérateur transposé conjugué.

On peut alors particulariser l'équation (13) relative à la capacité théorique $c_{\Delta_t}$ pour un sous-ensemble $S$ et une partition ordonnée $\Gamma$. On peut notamment noter que l'ordre de décodage suit l'ordre des groupes de $\Gamma$, puisque la partition est considérée ordonnée, c'est-à-dire l'ordre de I à K.

Par ailleurs, dans des conditions de feedback réduit comme indiqué précédemment, la puissance est considérée fixée et, en l'absence de connaissance de canal à l'émission, équidistribuée entre toutes les antennes d'émission actives.

Ainsi, on a : $\forall i \in S, P_i = \dfrac{1}{d}$ et $\forall j \notin S, P_j = 0,$ avec d=|S| le nombre d'antennes actives dans l'ensemble $S$.

Pour ce type de récepteur, chaque capacité par flux est classiquement calculée à partir d'inversions matricielles, comme dans l'équation (14).

Par conséquent, il faut autant d'inversions matricielles de taille $N_R \times N_R$ que de groupes dans l'ensemble $S$ des antennes actives (qui comprend d éléments), chaque inversion présentant une complexité d'ordre $O\left( N_R^3 + N_R^2 \left( d - \sum_{p=1}^{l} |\Delta_p| \right) \right)$ selon la notation de Landau.

Une autre approche de plus faible complexité permet d'obtenir chaque matrice à inverser par une méthode récursive. De cette manière, une nouvelle valeur $\mathbf{B}_{t+1}$ (équation (18) ci-après) est obtenue en mettant à jour une valeur précédente $B_t$ (équation (15)), où $l$ est le $l+1^{\text{ème}}$ groupe d'antennes décodé considéré, avec $0 \le l < \kappa$ :

$$\mathbf{B}_t = \left( \mathbf{I}_{N_R} + \frac{\rho}{d} \sum_{j=1}^{l} \mathbf{H}_{\Delta_j} \mathbf{H}_{\Delta_j}^\dagger \right)^{-1} \qquad (15)$$

La nouvelle valeur $\hat{B}_{t+1}$ est alors obtenue grâce au lemme d'inversion matricielle, aussi appelé identité matricielle de Woodbury, donnée par la relation suivante :

$$(A+UCV)^{-1} = A^{-1} - A^{-1}U(C^{-1} + VA^{-1}U)^{-1}VA^{-1}$$

On obtient alors :

$$B_{I+1} = \left( I_{N_R} + \frac{\rho}{d} \sum_{j=1}^{I+1} H_{\Delta_j} H_{\Delta_j}^\dagger \right)^{-1} \qquad (16)$$

$$B_{I+1} = \left( I_{N_R} + \frac{\rho}{d} \sum_{j=1}^{I} H_{\Delta_j} H_{\Delta_j}^\dagger + \frac{\rho}{d} H_{\Delta_{I+1}} H_{\Delta_{I+1}}^\dagger \right)^{-1} \qquad (17)$$

$$B_{I+1} = B_I - \frac{\rho}{d} B_I H_{\Delta_{I+1}} (I_{|\Delta_{I+1}|} + \frac{\rho}{d} H_{\Delta_{I+1}}^\dagger B_I H_{\Delta_{I+1}})^{-1} H_{\Delta_{I+1}}^\dagger B_I \qquad (18)$$

L'ordre de complexité est ainsi réduit et égal à $O\left( N_R^2 |\Delta_I| \right)$.

Le premier algorithme décrit en relation avec la figure 9 peut donc être particularisé et réécrit sous la forme d'un deuxième algorithme.

Ce deuxième algorithme simplifié est notamment repris dans l'annexe B, qui fait partie intégrante de la présente description.

*(ii) Deuxième exemple*

Si le système considéré possède une partition fixée, le premier algorithme et le deuxième algorithme (ainsi que ceux qui en découlent) peuvent se simplifier en cherchant uniquement l'ordre de décodage optimal de la partition fixée.

*(iii) Troisième exemple*

Par ailleurs, la recherche exhaustive du meilleur ensemble d'antennes d'émission actives parmi les $N_T$ antennes d'émission augmente exponentiellement avec le nombre $N_T$ d'antennes d'émission disponibles.

Par conséquent, afin de diminuer la complexité de cette recherche, différents modes de réalisation sont proposés.

Par exemple, un des modes de réalisation repose sur une implémentation itérative partant d'un ensemble *S* vide. Un autre mode de réalisation repose sur une implémentation itérative partant d'un *ensemble S* plein, c'est-à-dire comprenant les $N_T$ antennes d'émission. En effet, les pertes en performance dues à ces implémentations itératives sont négligeables. De plus, ces deux modes de réalisation aboutissent à la même sélection de l'ensemble *S*.

Par exemple, on présente en relation avec l'annexe C, qui fait partie intégrante de la présente description, l'algorithme de sélection des antennes d'émission, conjointement à la sélection des rendement discrets par antenne, reposant sur un mode de réalisation itératif dit « incrémental », encore noté troisième algorithme. On considère que les matrices $A_{\Delta_i}$ sont connues.

Plus : précisément, lors de cet algorithme, les antennes d'émission sélectionnées, c'est-à-dire choisies comme activées, sont ajoutées une à une à l'ensemble *S*.

De manière similaire, l'algorithme de sélection des antennes d'émission reposant sur un mode de réalisation itératif dit « décrémental », c'est-à-dire commençant avec un ensemble *S* d'antennes d'émission plein comprenant les $N_T$ antennes d'émission, peut être aisément obtenu à partir de l'algorithme incrémental précédent.

Dans ce cas, on soustrait une à une les antennes d'émission si la somme capacité de l'ensemble contenant x antennes est supérieure à celle contenant *x*+1 antennes.

En particulier, dans le cas d'un récepteur MMSE combiné à une succession d'interférences, la façon de calculer les capacités par antenne est effectuée d'une manière semblable à celle décrite en relation avec le premier exemple, c'est-à-dire en utilisant une méthode récursive permettant l'obtention des matrices inverses.

L'algorithme illustrant la mise en oeuvre de cette technique, noté quatrième algorithme, est notamment présenté en annexe D, qui fait partie intégrante de la présente description.

Finalement, afin de réduire davantage la complexité des algorithmes itératifs, il peut être intéressant de n'explorer que l'ordonnancement optimal, ou encore que le choix de partition optimal, à chaque ajout (respectivement à chaque suppression pour la mise en ouvre du mode de réalisation itératif décrémental) d'une antenne d'émission dans l'ensemble S des antennes d'émission actives.

Cette simplification conduit dans les troisième et quatrième algorithmes, présentés respectivement en annexe C et en annexe D, à supprimer soit l'étape de recherche de la meilleure partition (étape notée 1.2 dans les annexes), soit l'étape de recherche de la meilleure permutation de l'ensemble S (étape notée 1.2.1 dans les annexes, encore appelée étape de recherche d'un ordonnancement optimal).

Ainsi, si par exemple on choisit de supprimer l'étape de recherche de l'ordonnancement optimal, un ordre de décodage fixe est imposé par la façon d'ajouter les éléments dans l'ensemble S pour une procédure de type incrémentale. Lors d'une sélection décrémentale, l'ordre de décodage est fixé lors d'une étape d'initialisation, Il peut par exempte être basé sur un critère de classement des SINRs en sortie du MMSE avant la suppression d'interférences ; on teste la suppression du plus faible à chaque itération.

Cette simplification entraîne cependant une dégradation des performances.

*5.7 Structures des dispositifs d'émission et de réception*

On présente finalement, en relation avec les figures 4 et 5, Les structures simplifiées d'un dispositif d'émission et d'un dispositif de réception mettant respectivement en oeuvre en oeuvre une technique d'émission et de réception telles que décrites ci-dessus.

Un dispositif d'émission comprend une mémoire 41 constituée d'une mémoire tampon, une unité de traitement 42, équipée par exemple d'un microprocesseur $\mu P$, et pilotée par le programme d'ordinateur 43, mettant en oeuvre le procédé d'émission selon l'invention.

A l'initialisation, les instructions de code du programme d'ordinateur 43 sont par exemple chargées dans une mémoire RAM avant d'être exécutées par le processeur de l'unité de traitement 42. L'unité de traitement 42 reçoit en entrée un flux de données binaires $d$, et un signal de paramétrage 15. par exemple sous la forme d'un message CQI. Le microprocesseur de l'unité de traitement 42 met en oeuvre les étapes du procédé d'émission décrit précédemment, selon les instructions du programme d'ordinateur 43, pour adapter la répartition des antennes d'émission par groupe et affecter des rendements spécifiques à chacun des groupes, en fonction des rendements disponibles en émission, de façon à optimiser les performances de transmission.

Pour cela, le dispositif d'émission comprend des moyens de réception d'un signal de paramétrage transmis par ledit récepteur, des moyens de sélection d'une des répartitions définies dans le signal de paramétrage, des moyens de répartition des antennes d'émission selon les groupes de la répartition sélectionnée, et des moyens d'attribution à chacun des groupes du rendement spécifique correspondant, défini dans le signal de paramétrage.

Ces moyens sont pilotés par le microprocesseur de l'unité de traitement 42.

Le dispositif de réception comprend également une mémoire 51, une unité de traitement 52, équipée par exemple d'un microprocesseur $\mu P$, et pilotée par le programme d'ordinateur 53, mettant en oeuvre le procédé de réception selon l'invention.

A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée un signal reçu 11. Le microprocesseur de l'unité de traitement 52 met en oeuvre les étapes du procédé de réception décrit précédemment, selon les instructions du programme d'ordinateur 53, pour analyser le signal reçu et déterminer un signal de paramétrage 15 définissant au moins une répartition des antennes d'émission en groupes d'antenne(s) et des rendements spécifiques affectés respectivement à chacun des groupes d'antennes pour chaque répartition, en fonction d'une information représentative du canal de transmission.

Pour cela, le dispositif de réception comprend des moyens d'analyse du signal reçu, délivrant une information représentative du canal de transmission, des moyens de détermination, en fonction de l'information représentative du canal de transmission :

- d'au moins une répartition desdites antennes d'émission en groupes d'antenne(s) ;
- des rendements spécifiques affectés respectivement à chacun desdits groupes d'antennes pour chaque répartition,

et des moyens de transmission à l'émetteur d'un signal de paramétrage définissant la ou les répartitions et les rendements spécifiques.

**Annexe A**

**Entrées:** a. information sur la qualité du canal.

      b. jeu de rendements discrets

**Initialisation** $R_{max}$ = 0 ;

pour chaque *Combinaison i ayant pour sous-ensemble* $S_i \subseteq \{1, \cdots, N_T\}$ **faire**
  **pour chaque** *Partition ordonnée* $\Gamma_j$ *de* $S_i$ *possédant* $K$ *groupes* $\{\Delta_1 \cdots, \Delta_K\}$ **faire**
    1. Calcul des $A_{\Delta_t}$ suivant le récepteur considéré pour chaque groupe d'antennes $\Delta_t$, $t = 1$ à $K$
    2. Calcul des capacités correspondantes : $c_{\Delta_t} = \log_2(I_{|\Delta_t|} + A_{\Delta_t})$
    3. Allocation des rendements discrets $R_{i,j} = \bigcup_{t=1}^{K} \{\lfloor c_{\Delta_t} \rfloor\}$
    $\rightarrow$ obtention de la somme capacité discrète $T_{i,j} = \sum_{t=1}^{K} \lfloor c_{\Delta_t} \rfloor$
    4. Comparaison : $T_{i,j} > R_{max}$ ?
    5. **si** *condition vérifiée* **alors**
      $R_{max} = T_{i,j}$
      $R = R_{i,j}$
      $S = S_i$
      $\Gamma = \Gamma_j$

**Sorties:** a. *S* l'ensemble des antennes sélectionnées,

      b. *R* l'ensemble ordonné des rendements correspondants
      c. $\Gamma$ la partition ordonnée choisie

**Annexe B**

**Entrées:** a. information sur la qualité du canal.

      b. jeu de rendements discrets

**Initialisation** $R_{max}$ = 0 :

pour chaque *Combinaison i ayant pour sous-ensemble de d éléments*
$S_i \subseteq \{1, \cdots, N_T\}$ **faire**
  **pour chaque** *Partition ordonnée* $\Gamma_j$ *de* $S_i$ *possédant* $K$ *groupes* $\{\Delta_1, \cdots, \Delta_K\}$
  **faire**
    $T_{i,j} = 0$
    $R_{i,j} = \emptyset$
    $B = I_{N_R}$
    **pour chaque** *groupe* $\Delta_t$, $t = K$ *à* 1 **faire**
      $A_{\Delta_t} = \frac{\rho}{d} H_{\Delta_t}^\dagger B H_{\Delta_t}$
      $c_{\Delta_t} = \log_2 \det(I_{|\Delta_t|} + A_{\Delta_t})$
      $B = B - \frac{\rho}{d} B H_{\Delta_t}(I_{|\Delta_t|} + A_{\Delta_t})^{-1} H_{\Delta_t}^\dagger B$
      $T_{i,j} = T_{i,j} + \lfloor c_{\Delta_t} \rfloor$
      $R_{i,j} = R_{i,j} \cup \{\lfloor c_{\Delta_t} \rfloor\}$
    Comparaison : $T_{i,j} > R_{max}$ ?
    **si** *condition vérifée alors*
      $R_{max} = T_{i,j}$ ;
      $R = R_{i,j}$ ;
      $S = S_i$
      $\Gamma = \Gamma_j$

**Sorties:** a. $S$ l'ensemble des antennes sélectionées,

b. $R$ l'ensemble ordonné des rendements correspondants
c. $\Gamma$ la partition ordonnée choisie

**Annexe C**

**Entrées:** a. information sur la qualité du canal.

b. jeu de rendements discrets

**Initialisation** $R_{max} = 0$ ;

$S = 0$ :

```
pour n = 1 à N_T faire
    1. pour chaque élément i de S̄ faire
        1.1 Tester l'ensemble S_i = S ∪ {i}
        1.2 pour chaque Partition Γ_j de S_i faire
            1.2.1 pour chaque Permutation des groupes de Γ_j donnant la partition
                  Γ_{j,p} possédant K groupes {Δ_1, ⋯ , Δ_K} faire
                1.2.1.1 Calcul des A_Δ suivant le récepteur choisi pour chaque groupe
                        d'antennes Δ_t, t = 1 à K
                1.2.1.2 Calcul des capacités correspondantes :
                        c_{Δ_t} = log_2 det(Γ_{|Δ_t|} + A_{Δ_t})
                1.2.1.3 Allocation des rendements discrets R_{i,j,p} = ⋃_{t=1}^{K} {⌊c_{Δ_t}⌋}
                → obtention de la somme capacité discrète T_{i,j,p} = ∑_{t=1}^{K} ⌊c_{Δ_t}⌋
    2. Trouver [I, J, P] tel que [I, J, P] = arg max_{i,j,p} T_{i,j,p}
    3. Comparer : T_{I,J,P} > R_max ?
    4. si condition vérifée alors
        R_max = T_{I,J,P}
        R = R_{I,J,P}
        S = S_I
        Γ = Γ_{J,P}
    sinon
        Sortie
```

**Sorties:** a. $S$ l'ensemble des antennes sélectionnées,

b. $R$ l'ensemble ordonné des rendements correspondants

c. $\Gamma$ la partition ordonnée choisie

**Annexe D**

**Entrées:** a. information sur la qualité du canal,

b. jeu de rendements discrets

**Initialisation** $R_{max} = 0$ ;

$S = 0$ ;

pour $n = 1$ à $N_T$ faire
  1. pour chaque *élement* $i$ de $\bar{S}$ faire
    1.1 Tester l'ensemble $S_i = S \cup \{i\}$
    1.2 pour chaque *Partition* $\Gamma_j$ de $S_i$ faire
      1.2.1 pour chaque *Permutation des groupes de* $\Gamma_j$ *donnant la partition* $\Gamma_{j,p}$ *possédant* $K$ *groupes* $\{\Delta_1, \cdots, \Delta_K\}$ faire
        $T_{i,j,p} = 0$
        $R_{i,j,p} = 0$
        $B = I_{N_H}$
        pour chaque *groupe* $\Delta_t$, $t = K$ à $1$ faire
          $A_{\Delta_t} = \frac{\rho}{n} H^\dagger_{\Delta_t} B H_{\Delta_t}$
          $c_{\Delta_t} = \log_2 \det(I_{|\Delta_t|} + A_{\Delta_t})$
          $B = B - \frac{\rho}{n} B H_{\Delta_t}(I_{|\Delta_t|} + A_{\Delta_t})^{-1} H^\dagger_{\Delta_t} B$
          $T_{i,j,p} = T_{i,j,p} + \lfloor c_{\Delta_t} \rfloor$
          $R_{i,j,p} = R_{i,j,p} \cup \{\lfloor c_{\Delta_t} \rfloor\}$

  2. Trouver $[I, J, P]$ tel que $[I, J, P] = \arg\max_{i,j,p} T_{i,j,p}$
  3. Comparer : $T_{I,J,P} > R_{max}$ ?
  4. si *condition vérifée* alors
    $R_{max} = T_{I,J,P}$
    $R = R_{I,J,P}$
    $S = S_I$
    $\Gamma = \Gamma_{J,P}$
  **sinon**
    Sortie

**Sorties:** a. $S$ l'ensemble des antennes sélectionnées,

    b. $R$ l'ensemble ordonné des rendements correspondants
    c. $\Gamma$ la partition ordonnée choisie

**Revendications**

1. Procédé de réception d'un signal reçu (11), correspondant à un signal de données émis par un émetteur à destination d'un récepteur via un canal de transmission, ledit émetteur comprenant $N_T$ antennes d'émission et ledit récepteur comprenant $N_R$ antennes de réception, avec $N_T$ et $N_R$ supérieurs ou égaux à 2, **caractérisé en ce qu'**il comprend les étapes suivantes :

    - analyse (12) dudit signal reçu, délivrant une information (14) représentative dudit canal de transmission ;
    - détermination périodique ou en fonction d'une variation dudit canal de transmission:

      ■ d'au moins une répartition desdites antennes d'émission en au moins un groupe d'au moins une antenne, en fonction de ladite information représentative du canal de transmission ;
      ■ des rendements spécifiques affectés respectivement à chacun desdits groupes d'antennes, pour chaque répartition en fonction de la dite information représentative du canal de transmission ;

    au moins un groupe comprenant au moins deux antennes d'émission pour au moins une desdites déterminations ;
    - transmission audit émetteur d'un signal de paramétrage (15) définissant la ou lesdites répartitions et lesdits rendements spécifiques

2. Procédé de réception selon la revendication 1, **caractérisé en ce que** lesdites étapes d'analyse et de transmission sont également mises en oeuvre de façon périodique et/ou en fonction d'une variation dudit canal de transmission.

3. Procédé de réception selon l'une quelconque des revendications 1 et 2, **caractérisé en ce que** ladite étape de détermination détermine des puissances spécifiques allouées respectivement à chacune desdites antennes d'émission, et **en ce que** ledit signal de paramétrage (15) définit également lesdites puissances.

**4.** Procédé de réception selon l'une quelconque des revendications 1 à 3, **caractérisé en ce qu'**il comprend une étape de sélection d'antennes d'émission parmi lesdites $N_T$ antennes d'émission, dites antennes actives, au moins en fonction de ladite information (14) représentative du canal de transmission,
et **en ce que** ledit signal de paramétrage (15) définit lesdites antennes actives.

**5.** Procédé de réception selon la revendication 4, **caractérisé en ce que** ladite étape de sélection est mise en oeuvre conjointement à ladite étape de détermination.

**6.** Procédé de réception selon l'une quelconque des revendications 4 et 5, **caractérisé en ce qu'**une répartition ordonnée optimisée $\Gamma^*$, les rendements spécifiques par groupe $R^*$ pour cette répartition, et un ensemble optimisé $S^*$ des antennes actives, sont déterminés à partir des équations suivantes :

$$(S^*, \Gamma^*) = \arg \max_{S,\Gamma} T_{S,\Gamma}$$

$$R^* = \bigcup_{i=1}^{K} \left\{ r_{\Delta_i}^*(S^*, \Gamma^*) \right\}$$

avec:

$$T_{S,\Gamma} = \sum_{i=1}^{K} r_{\Delta_i}^*(S,\Gamma);$$

$$r_{\Delta_i}^*(S,\Gamma) = \arg \min_{r_{\Delta_i} \in \mathcal{J}_{|\Delta_i|}} (c_{\Delta_i} - r_{\Delta_i}) \text{ tel que } r_{\Delta_i}^*(S,\Gamma) \leq c_{\Delta_i} ;$$

$$c_{\Delta_i} = \log_2 \det \left( \mathbf{I}_{|\Delta_i|} + \mathbf{A}_{\Delta_i} \left( P_1, \cdots, P_{N_T}, \mathbf{H}, \rho \right) \right);$$

où :

- H est représentatif dudit canal de transmission ;
- p correspond au rapport signal à bruit ;
- $\{P_1, ... P_{N_T}\}$ correspond à un jeu de puissances d'émission attribuées à chaque antenne d'émission ;
- $J_{|\Delta|}$ correspond à un jeu de rendements discrets disponibles à l'émission ;
- $\Delta$ correspond à un groupe inclus dans la répartition $\Gamma$ ;
- $A_\Delta$ est une matrice représentative dudit récepteur.

**7.** Procédé de réception selon l'une quelconque des revendications 1 à 6, **caractérisé en ce que** ladite au moins une répartition est déterminée en tenant compte d'au moins un des éléments appartenant au groupe comprenant :

- des rendements discrets disponibles à l'émission ;
- des puissances associées à chaque répartition en groupes desdites antennes d'émission ;
- un ordre de décodage mis en oeuvre au niveau dudit récepteur ;
- le nombre $N_R$ d'antennes de réception ;
- un nombre d'antennes d'émission actives.

**8.** Procédé de réception selon l'une quelconque des revendications 1 à 7, **caractérisé en ce qu'**il met en oeuvre une étape de détermination d'un ordonnancement desdits groupes, et une étape de décodage mise en oeuvre successivement pour chaque groupe suivant ledit ordonnancement.

**9.** Procédé de réception selon la revendication 8, **caractérisé en ce que** ledit ordonnancement minimise une métrique tenant compte des répartitions en groupes desdites antennes d'émission et/ou des puissances fournies par lesdites antennes d'émission et/ou des rendements spécifiques et/ou d'un ordre de décodage.

**10.** Procédé d'émission d'un signal de données d'un émetteur vers un récepteur via un canal de transmission, ledit émetteur comprenant $N_T$ antennes d'émission et ledit récepteur comprenant $N_R$ antennes de réception, avec $N_T$ et $N_R$ supérieurs ou égaux à 2,
**caractérisé en ce qu'** il comprend les étapes suivantes :

- réception d'un signal de paramétrage (15) transmis par ledit récepteur définissant :

■ au moins une répartition desdites antennes d'émission en au moins un groupe d'au moins une antenne ;
■ des rendements spécifiques affectés respectivement à chacun desdits groupes d'antennes, pour chaque répartition;

obtenus, en fonction d'une information représentative du canal de transmission, par détermination périodique ou en fonction d'une

- variation du canal de transmission,
au moins un groupe comprenant au moins deux antennes d'émission pour au moins une détermination ;
- sélection d'une desdites répartitions parmi la ou lesdites répartitions définies dans ledit signal de paramétrage (15) ;
- répartition desdites antennes d'émission selon les groupes de ladite répartition sélectionnée ;
- attribution à chacun desdits groupes du rendement spécifique correspondant, défini dans ledit signal de paramétrage (15).

**11.** Dispositif de réception d'un signal reçu (11), correspondant à un signal de données émis par un émetteur via un canal de transmission, ledit émetteur comprenant $N_T$ antennes d'émission et ledit dispositif de réception comprenant $N_R$ antennes de réception, avec $N_T$ et $N_R$ supérieurs ou égaux à 2,
**caractérisé en ce qu'**il comprend :

- des moyens d'analyse dudit signal reçu (11), délivrant une information représentative (14) dudit canal de transmission ;
- des moyens de détermination périodique ou en fonction d'une variation dudit canal de transmission :

■ d'au moins une répartition desdites antennes d'émission en au moins un groupe d'au moins une antenne, en fonction de ladite information représentative du canal de transmission ;
■ des rendements spécifiques affectés respectivement à chacun desdits groupes d'antennes, pour chaque répartition en fonction de ladite information représentative du canal de transmission ;

au moins un groupe comprenant au moins deux antennes d'émission pour au moins une desdites déterminations ;
- des moyens de transmission audit émetteur d'un signal de paramétrage (15) définissant la ou lesdites répartitions et lesdits rendements spécifiques.

**12.** Dispositif d'émission d'un signal de données vers un récepteur via un canal de transmission, ledit dispositif d'émission comprenant $N_T$ antennes d'émission et ledit récepteur comprenant $N_R$ antennes de réception, avec $N_T$ et $N_R$ supérieurs ou égaux à 2,
**caractérisé en ce qu'**il comprend :

- des moyens de réception d'un signal de paramétrage (15) transmis par ledit récepteur définissant :

■ au moins une répartition desdites antennes d'émission en au moins un groupe d'au moins une antenne ;
■ des rendements spécifiques affectés respectivement à chacun desdits groupes d'antennes, pour chaque répartition ;

obtenus, en fonction d'une information représentative du canal de transmission, par détermination périodique ou en fonction d'une variation du canal de transmission,
au moins un groupe comprenant au moins deux antennes d'émission pour au moins une détermination ;

- des moyens de sélection d'une desdites répartitions parmi la ou lesdites répartitions définies dans ledit signal de paramétrage ;
- des moyens de répartition desdites antennes d'émission selon les groupes de ladite répartition sélectionnée ;
- des moyens d'attribution à chacun desdits groupes du rendement spécifique correspondant, défini dans ledit signal de paramétrage.

**13.** Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de réception selon l'une au moins des revendications 1 à 9.

**14.** Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé d'émission selon la revendication 10.

**15.** Signal de paramétrage d'un émetteur, transmis d'un récepteur à destination dudit émetteur via un canal de transmission, ledit émetteur comprenant $N_T$ antennes d'émission et ledit récepteur comprenant $N_R$ antennes de réception, avec $N_T$ et $N_R$ supérieurs ou égaux à 2,
**caractérisé en ce qu'**il comprend au moins un champ de paramétrage comprenant :

- une information relative à au moins une répartition desdites antennes d'émission en au moins un groupe d'au moins une antenne ; et
- une information relative à des rendements spécifiques affectés respectivement à chacun desdits groupes d'antennes, pour chaque répartition,

obtenues, en fonction d'une information représentative dudit canal de transmission, par détermination périodique ou en fonction d'une variation du canal de transmission,
au moins un groupe comprenant au moins deux antennes d'émission pour au moins une détermination.

## Patentansprüche

**1.** Verfahren zum Empfangen eines Empfangssignals (11), das einem Datensignal entspricht, das von einem an einen Empfänger gerichteten Sender über einen Übertragungskanal gesendet wird, wobei der Sender $N_T$ Sendeantennen umfasst und der Empfänger $N_R$ Empfangsantennen umfasst, wobei $N_T$ und $N_R$ größer oder gleich 2 sind, **dadurch gekennzeichnet, dass** es die folgenden Schritte umfasst:

- Analysieren (12) des empfangenen Signals, was eine den Übertragungskanal repräsentierende Information (14) ergibt;
- Bestimmen auf periodische Weise oder als Funktion einer Veränderung des Übertragungskanals:

· wenigstens einer Verteilung der Sendeantennen auf wenigstens eine Gruppe aus wenigstens einer Antenne als Funktion der den Übertragungskanal repräsentierenden Information und
· der spezifischen Wirkungsgrade, die jeder der Gruppen von Antennen zukommen, für jede Verteilung als Funktion der den Übertragungskanal repräsentierenden Information;
wobei wenigstens eine Gruppe für wenigstens eine der Bestimmungen wenigstens zwei Sendeantennen umfasst;

- Übertragen eines Parametrierungssignals (15), das die eine oder die mehreren Verteilungen und die spezifischen Wirkungsgrade definiert, an den Sender.

**2.** Empfangsverfahren nach Anspruch 1, **dadurch gekennzeichnet, dass** die Schritte des Analysierens und Übertragens ebenfalls auf periodische Weise und/oder als Funktion einer Veränderung des Übertragungskanals ausgeführt werden.

**3.** Empfangsverfahren nach einem der Ansprüche 1 und 2, **dadurch gekennzeichnet, dass** der Bestimmungsschritt die spezifischen Leistungen, die jeder der Sendeantennen zugewiesen sind, bestimmt und dass das Parametrisierungssignal (15) auch diese Leistungen definiert.

4. Empfangsverfahren nach einem der Ansprüche 1 bis 3, **dadurch gekennzeichnet, dass** es einen Schritt des Auswählens von Sendeantennen unter den $N_T$ Sendeantennen, den so genannten aktiven Antennen, wenigstens als Funktion der den Übertragungskanal repräsentierenden Information (14) umfasst,
und dass das Parametrisierungssignal (15) die aktiven Antennen definiert.

5. Empfangsverfahren nach Anspruch 4, **dadurch gekennzeichnet, dass** der Auswahlschritt gemeinsam mit dem Bestimmungsschritt ausgeführt wird.

6. Empfangsverfahren nach einem der Ansprüche 4 und 5, **dadurch gekennzeichnet, dass** eine optimierte geordnete Verteilung $\Gamma^*$, die spezifischen Wirkungsgrade pro Gruppe $R^*$ für diese Verteilung und eine optimierte Gesamtheit $S^*$ der aktiven Antennen anhand der folgenden Gleichungen bestimmt werden:

$$(S^*,\Gamma^*) = \arg\max_{S,\Gamma} T_{S,\Gamma}$$

$$R^* = \bigcup_{i=1}^{K} \left\{ r_{\Delta_i}^*(S^*,\Gamma^*) \right\}$$

mit:

$$T_{S,\Gamma} = \sum_{i=1}^{K} r_{\Delta_i}^*(S,\Gamma);$$

$$r_{\Delta_i}^*(S,\Gamma) = \arg\min_{r_{\Delta_i} \in J_{|\Delta_i|}} (c_{\Delta_i} - r_{\Delta_i}) \quad \text{tel que} \quad r_{\Delta_i}^*(S,\Gamma) \leq c_{\Delta_i};$$

$$c_{\Delta_i} = \log_2 \det\left( I_{|\Delta_i|} + A_{\Delta_i}\left( P_1,\cdots,P_{N_T},H,\rho \right) \right);$$

wobei:

    - H den Übertragungskanal repräsentiert;
    - $\rho$ dem Signal/Rausch-Verhältnis entspricht;
    - $\{P_1, ..., P_{NT}\}$ einem Satz Sendeleistungen, die zu jeder Sendeantenne gehören, entspricht;
    - $J_{|\Delta|}$ einem Satz diskreter Wirkungsgrade, die beim Senden verfügbar sind, entspricht;
    - $\Delta$ einer Gruppe entspricht, die in der Verteilung $\Gamma$ enthalten ist;
    - $A_\Delta$ eine Matrix ist, die den Empfänger repräsentiert.

7. Empfangsverfahren nach einem der Ansprüche 1 bis 6, **dadurch gekennzeichnet, dass** wenigstens eine Verteilung unter Berücksichtigung wenigstens eines der Elemente bestimmt wird, die zu der Gruppe gehört, die umfasst:

    - diskrete Wirkungsgrade, die beim Senden verfügbar sind;
    - Leistungen, die jeder Verteilung auf Gruppen der Sendeantennen zugeordnet sind;
    - eine Reihenfolge der Decodierung, die auf Höhe des Empfängers ausgeführt wird;
    - die Anzahl $N_R$ von Empfangsantennen;
    - eine Anzahl aktiver Sendeantennen.

8. Empfangsverfahren nach einem der Ansprüche 1 bis 7, **dadurch gekennzeichnet, dass** es einen Schritt des Bestimmens einer Reihung der Gruppen und einen Decodierungsschritt, der für jede Gruppe entsprechend der Reihung sukzessive ausgeführt wird, ausführt.

**9.** Empfangsverfahren nach Anspruch 8, **dadurch gekennzeichnet, dass** die Reihung eine Metrik minimiert, die die Verteilungen auf Gruppen der Sendeantennen und/oder die von den Sendeantennen gelieferten Leistungen und/oder die spezifischen Wirkungsgrade und/oder eine Decodierungsreihenfolge berücksichtigt.

**10.** Verfahren zum Senden eines Datensignals von einem Sender zu einem Empfänger über einen Übertragungskanal, wobei der Sender $N_T$ Sendeantennen umfasst und der Empfänger $N_R$ Empfangsantennen umfasst, wobei $N_T$ und $N_R$ größer oder gleich 2 sind,
**dadurch gekennzeichnet, dass** es die folgenden Schritte umfasst:

- Empfangen eines Parametrisierungssignals (15), das von dem Empfänger übertragen wird, das definiert:

• wenigstens eine Verteilung der Sendeantennen auf wenigstens eine Gruppe aus wenigstens einer Antenne und
• spezifische Wirkungsgrade, die jeder der Gruppen von Antennen für jede Verteilung zukommen;

die als Funktion einer den Übertragungskanal repräsentierenden Information durch Bestimmung auf periodische Weise oder als Funktion einer Veränderung des Übertragungskanals erhalten werden,
wobei wenigstens eine Gruppe für wenigstens eine Bestimmung wenigstens zwei Sendeantennen umfasst;

- Auswählen einer der Verteilungen unter der einen oder den mehreren Verteilungen, die in dem Parametrisierungssignal (15) definiert sind;
- Verteilen der Sendeantennen entsprechend den Gruppen der gewählten Verteilung;
- Hinzufügen zu jeder der Gruppen des entsprechenden spezifischen Wirkungsgrades, der in dem Parametrisierungssignal (15) definiert ist.

**11.** Vorrichtung zum Empfangen eines empfangenen Signals (11), das einem Datensignal entspricht, das von einem Sender über einen Übertragungskanal gesendet wird, wobei der Sender $N_T$ Sendeantennen umfasst und die Empfangsvorrichtung $N_R$ Empfangsantennen umfasst, wobei $N_T$ und $N_R$ größer oder gleich 2 sind,
**dadurch gekennzeichnet, dass** sie Folgendes umfasst:

- Mittel zum Analysieren des empfangenen Signals (11), was eine den Übertragungskanal repräsentierende Information (14) ergibt;
- Mittel zum Bestimmen auf periodische Weise oder als Funktion einer Veränderung des Übertragungskanals:

• wenigstens einer Verteilung der Sendeantennen auf wenigstens eine Gruppe aus wenigstens einer Antennen als Funktion der den Übertragungskanal repräsentierenden Information

und

• der spezifischen Wirkungsgrade, die jeder der Gruppen von Antennen zukommen, für jede Verteilung als Funktion der den Übertragungskanal repräsentierenden Information;

wobei wenigstens eine Gruppe wenigstens zwei Sendeantennen für wenigstens eine der Bestimmungen umfasst;

- Mittel zum Übertragen eines Parametrisierungssignals (15), das die eine oder die mehreren Verteilungen und die spezifischen Wirkungsgrade definiert, an den Sender.

**12.** Vorrichtung zum Senden eines Datensignals zu einem Empfänger über einen Übertragungskanal, wobei die Sendevorrichtung $N_T$ Sendeantennen umfasst und der Empfänger $N_R$ Empfangsantennen umfasst, wobei $N_T$ und $N_R$ größer oder gleich 2 sind,
**dadurch gekennzeichnet, dass** sie Folgendes umfasst:

- Mittel zum Empfangen eines Parametrisierungssignals (15), das von dem Empfänger übertragen wird und definiert:

• wenigstens eine Verteilung der Sendeantennen auf wenigstens eine Gruppe aus wenigstens einer Antenne und
• spezifische Wirkungsgrade, die jeder der Gruppen von Antennen zukommen, für jede Verteilung;

die als Funktion einer den Übertragungskanal repräsentierenden Information durch Bestimmen auf periodische Weise oder als Funktion einer Veränderung des Übertragungskanals erhalten werden,
wobei wenigstens eine Gruppe für wenigstens eine Bestimmung wenigstens zwei Sendeantennen umfasst;

- Mittel zum Auswählen der Verteilungen unter der einen oder den mehreren Verteilungen, die in dem Parametrisierungssignal definiert sind;
- Mittel zum Verteilen der Sendeantennen entsprechend den Gruppen der gewählten Verteilung;
- Mittel zum Hinzufügen zu jeder der Gruppen des entsprechenden spezifischen Wirkungsgrades, der in dem Parametrisierungssignal definiert ist.

13. Computerprogrammprodukt, das von einem Kommunikationsnetz heruntergeladen werden kann und/oder auf einem computerlesbaren Träger aufgezeichnet ist und/oder von einem Prozessor ausführbar ist, **dadurch gekennzeichnet, dass** es Programmcodebefehle für die Ausführung des Empfangsverfahrens nach wenigstens einem der Ansprüche 1 bis 9 umfasst.

14. Computerprogrammprodukt, das von einem Kommunikationsnetz heruntergeladen werden kann und/oder auf einem computerlesbaren Träger aufgezeichnet ist und/oder von einem Prozessor ausführbar ist, **dadurch gekennzeichnet, dass** es Programmcodebefehle für die Ausführung des Sendeverfahrens nach Anspruch 10 umfasst.

15. Parametrisierungssignal von einem Sender, das von einem an den Sender gerichteten Empfänger über einen Übertragungskanal übertragen wird, wobei der Sender $N_T$ Sendeantennen umfasst und der Empfänger $N_R$ Empfangsantennen umfasst, wobei $N_T$ und $N_R$ größer oder gleich 2 sind,
**dadurch gekennzeichnet, dass** es wenigstens ein Parametrisierungsfeld enthält, das Folgendes umfasst:

- eine Information bezüglich wenigstens einer Verteilung der Sendeantennen auf wenigstens eine Gruppe aus wenigstens einer Antenne; und
- eine Information bezüglich der spezifischen Wirkungsgrade, die jeder der Gruppen von Antennen zukommen, für jede Verteilung,

die als Funktion einer den Übertragungskanal repräsentierenden Information durch Bestimmung auf periodische Weise oder als Funktion einer Veränderung des Übertragungskanals erhalten werden,
wobei wenigstens eine Gruppe für wenigstens eine Bestimmung wenigstens zwei Sendeantennen umfasst.

**Claims**

1. Method for reception of a received signal (11), corresponding to a data signal transmitted by a transmitter to a receiver via a transmission channel, said transmitter comprising $N_T$ transmission antennas and said receiver comprising $N_R$ reception antennas, with $N_T$ and $N_R$ greater than or equal to 2,
**characterized in that** it comprises the following steps:

- analysis (12) of said received signal, delivering an item of information (14) representative of said transmission channel;
- determination, periodically or as a function of a variation in said transmission channel:

  ■ of at least one distribution of said transmission antennas into at least one group of at least one antenna, as a function of said item of information representative of the transmission channel,
  ■ of the specific rates assigned to each of said groups of antennas respectively, for each distribution as a function of said item of information representative of the transmission channel;
  at least one group comprising at least two transmission antennas for at least one of said determinations;

- transmission to said transmitter of a parameterization signal (15) defining said distribution or distributions and said specific rates.

2. Reception method according to Claim 1, **characterized in that** said analysis and transmission steps are also implemented periodically and/or as a function of a variation in said transmission channel.

3. Reception method according to any one of Claims 1 and 2, **characterized in that** said determination step determines specific powers allocated to each of said transmission antennas respectively, and **in that** said parameterization signal (15) also defines said powers.

4. Reception method according to any one of Claims 1 to 3, **characterized in that** it comprises a step of selection of transmission antennas among said $N_T$ transmission antennas, called active antennas, at least as a function of said item of information (14) representative of the transmission channel,
   and **in that** said parameterization signal (15) defines said active antennas.

5. Reception method according to Claim 4, **characterized in that** said selection step is implemented jointly with said determination step.

6. Reception method according to any one of Claims 4 and 5, **characterized in that** an optimized ordered distribution $\Gamma^*$, the specific rates per group R* for this distribution, and an optimized set S* of the active antennas, are determined from the following equations:

such that

$$(S^*, \Gamma^*) = \arg\max_{S,\Gamma} T_{S,\Gamma}$$

$$R^* = \bigcup_{i=1}^{K} \left\{ r^*_{\Delta_i}(S^*, \Gamma^*) \right\}$$

with:

$$T_{S,\Gamma} = \sum_{i=1}^{K} r^*_{\Delta_i}(S,\Gamma);$$

$$r^*_{\Delta_i}(S,\Gamma) = \arg\min_{r_{\Delta_i} \in J_{|\Delta_i|}} (c_{\Delta_i} - r_{\Delta_i}) \qquad r^*_{\Delta_i}(S,\Gamma) \le c_{\Delta_i};$$

$$c_{\Delta_i} = \log_2 \det\left( \mathbf{I}_{|\Delta_i|} + \mathbf{A}_{\Delta_i}\left( P_1, \cdots, P_{N_T}, \mathbf{H}, \rho \right) \right);$$

where:

- H is representative of said transmission channel;
- $\rho$ corresponds to the signal-to-noise ratio;
- $\{P_1,...,P_{NT}\}$ corresponds to a set of transmission powers attributed to each transmission antenna;
- $J_{|\Delta|}$ corresponds to a set of discrete rates available for transmission;
- $\Delta$ corresponds to a group included in the distribution $\Gamma$;
- $A_\Delta$ is a matrix representative of said receiver.

7. Reception method according to any one of Claims 1 to 6, **characterized in that** said at least one distribution is determined by taking into account at least one of the elements belonging to the group comprising:

- discrete rates available for transmission;

- powers associated with each distribution into groups of said transmission antennas;
- an order of decoding implemented at the level of said receiver;
- the number $N_R$ of reception antennas;
- a number of active transmission antennas.

8. Reception method according to any one of Claims 1 to 7, **characterized in that** it implements a step of determination of an ordering of said groups, and a step of decoding implemented successively for each group following said ordering.

9. Reception method according to Claim 8, **characterized in that** said ordering minimizes a metric taking into account the distributions into groups of said transmission antennas and/or the powers provided by said transmission antennas and/or the specific rates and/or an order of decoding.

10. Method for transmission of a data signal from a transmitter to a receiver via a transmission channel, said transmitter comprising $N_T$ transmission antennas and said receiver comprising $N_R$ reception antennas, with $N_T$ and $N_R$ greater than or equal to 2,
   **characterized in that** it comprises the following steps:

   - reception of a parameterization signal (15) transmitted by said receiver defining:

      ■ at least one distribution of said transmission antennas into at least one group of at least one antenna;
      ■ specific rates assigned to each of said groups of antennas respectively, for each distribution;
      ■ obtained as a function of an item of information representative of the transmission channel, by determination periodically or as a function of a variation in the transmission channel;
      ■ at least one group comprising at least two transmission antennas for at least one determination;

   - selection of one of said distributions among said distribution or distributions defined in said parameterization signal (15);
   - distribution of said transmission antennas into the groups of said selected distribution;
   - attribution to each of said groups of the corresponding specific rate, defined in said parameterization signal (15).

11. Device for reception of a received signal (11), corresponding to a data signal transmitted by a transmitter via a transmission channel, said transmitter comprising $N_T$ transmission antennas and said reception device comprising $N_R$ reception antennas, with $N_T$ and $N_R$ greater than or equal to 2,
   **characterized in that** it comprises:

   - means for analysis of said received signal (11), delivering an item of information (14) representative of said transmission channel;
   - means for determination, periodically or as a function of a variation in said transmission channel:

      ■ of at least one distribution of said transmission antennas into at least one group of at least one antenna, as a function of said item of information representative of the transmission channel,
      ■ of the specific rates assigned to each of said groups of antennas respectively, for each distribution as a function of said item of information representative of the transmission channel;
      at least one group comprising at least two transmission antennas for at least one of said determinations;

   - means for transmission to said transmitter of a parameterization signal (15) defining said distribution or distributions and said specific rates.

12. Device for transmission of a data signal to a receiver via a transmission channel, said transmission device comprising $N_T$ transmission antennas and said receiver comprising $N_R$ reception antennas, with $N_T$ and $N_R$ greater than or equal to 2,
   **characterized in that** it comprises:

   - means for reception of a parameterization signal (15) transmitted by said receiver defining:

      ■ at least one distribution of said transmission antennas into at least one group of at least one antenna;
      ■ specific rates assigned to each of said groups of antennas respectively, for each distribution;
      obtained, as a function of an item of information representative of the transmission channel, by determination,

periodically or as a function of a variation in the transmission channel,
at least one group comprising at least two transmission antennas for at least one determination,

- means for selection of one of said distributions among said distribution or distributions defined in said parameterization signal;
- means for distribution of said transmission antennas into the groups of said selected distribution;
- means for attribution to each of said groups of the corresponding specific rate, defined in said parameterization signal.

13. Computer program product downloadable from a communication network and/or stored on a medium readable by computer and/or executable by a processor, **characterized in that** it comprises program code instructions for the implementation of the reception method according to at least one of Claims 1 to 9.

14. Computer program product downloadable from a communication network and/or stored on a medium readable by computer and/or executable by a processor, **characterized in that** it comprises program code instructions for the implementation of the transmission method according to Claim 10.

15. Parameterization signal of a transmitter, transmitted from a receiver to said transmitter via a transmission channel, said transmitter comprising $N_T$ transmission antennas and said receiver comprising $N_R$ reception antennas, with $N_T$ and $N_R$ greater than or equal to 2,
**characterized in that** it comprises at least one parameterization field comprising:

- an item of information relating to at least one distribution of said transmission antennas into at least one group of at least one antenna; and
- an item of information relating to specific rates assigned to each of said groups of antennas respectively, for each distribution,
obtained, as a function of an item of information representative of said transmission channel, by determination periodically or as a function of a variation in the transmission channel,

at least one group comprising at least two transmission antennas for at least one determination.

11

12

14

13

15

<u>Fig. 1</u>

15

15$_1$  15$_2$  15$_3$  ...

<u>Fig. 2</u>

Fig. 3

Fig. 4

Fig. 5

61   62   63   64   65

**Fig. 6**

N_R   71   73

72

15

**Fig. 7**

61   82   83   84   65

**Fig. 8**

Fig. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   WO 0203568 A

**Littérature non-brevet citée dans la description**

*   **ERICSSON.** Selective Per Antenna Rate Control (S-PARC. *3GPP TSG RAN WG1,* Février 2004

*   **S. T. CHUNG et al.** Approaching the MIMO Capacity with low-rate feed-back channel in V-BLAST. *Eurasip Journal on applied signal processing,* 2004, 762-771